# EUROPÄISCHE PATENTSCHRIFT

(11) **EP 3 380 420 B1**
(45) Veröffentlichungstag und Bekanntmachung des Hinweises auf die Patenterteilung: **20.04.2022**
(21) Anmeldenummer: 16797854.3
(22) Anmeldetag: 15.11.2016
(51) Int. Cl.: B65G 47/32, B65G 47/84, B07C 5/12, B65G 33/04, G01B 5/02

(54) **VORRICHTUNG UND VERFAHREN ZUM VEREINZELN UND/ODER PRÜFEN VON BEHÄLTERN**
DEVICE AND METHOD FOR SEPARATING AND/OR TESTING CONTAINERS
INSTALLATION ET PROCÉDÉ PERMETTANT DE SÉPARER ET/OU DE CONTRÔLER DES CONTENANTS

(30) Priorität: 25.11.2015 DE 102015120426
(43) Veröffentlichungstag der Anmeldung: 03.10.2018
(73) Patentinhaber: Esomatec GmbH, 27249 Mellinghausen (DE)
(72) Erfinder: SPREEN, Hermann, 27249 Mellinghausen (DE); ALLHAUSEN, Stefan, 27246 Borstel (DE); LANDWEHR, Stefan, 31582 Nienburg (DE)
(74) Vertreter: Tappe, Udo
(86) Internationale Anmeldenummer: PCT/EP2016/077782
(87) Internationale Veröffentlichungsnummer: WO 2017/089188

(56) Entgegenhaltungen:
- EP-A1- 0 293 226
- EP-A1- 1 344 638
- EP-A1- 1 352 872
- EP-A1- 2 528 847
- EP-A1- 2 684 822
- EP-A2- 1 195 240
- CN-U- 203 382 095
- FR-A1- 2 775 270
- FR-A1- 2 803 277
- FR-A1- 2 965 344
- JP-A- H0 466 414
- JP-A- H01 127 521
- JP-A- H01 162 620
- JP-A- H11 292 275
- JP-A- S58 162 423
- JP-U- S55 176 225
- US-A- 5 697 489

## Beschreibung

Die Erfindung betrifft eine Vorrichtung zum Vereinzeln und/oder Prüfen von Behältern mit mindestens einem schrittweise antreibbaren Prozessierungssternrad zum Zuführen von Behältern zu mindestens einer Prozessierungseinrichtung, und mit einer kontinuierlich antreibbaren Ausführeinrichtung zum Ausführen der Behälter aus dem Prozessierungssternrad, wobei die Ausführeinrichtung mindestens ein Ausführsternrad aufweist. Des Weiteren betrifft die Erfindung ein Verfahren zum Vereinzeln und/oder Prüfen von Behältern mit einer erfindungsgemäßen Vorrichtung, wobei mit mindestens einem Prozessierungssternrad und mittels einer schrittweisen Bewegung des Prozessierungssternrades jeweils ein Behälter zu mindestens einer Prozessierungseinrichtung geführt wird, und bei dem mit einer Ausführeinrichtung die Behälter mit einer kontinuierlichen Bewegung aus dem Prozessierungssternrad ausgeführt werden.

Eine derartige Vorrichtung ist aus der JP H11 292275 A und der DE 41 28 733 A1 bekannt. JP H11 292275 A offenbart eine Vorrichtung nach dem Oberbegriff des Anspruchs 1.

Hierbei weist die DE 41 28 733 A1 eine Ausführeinrichtung einen Ausführstern und einen Ausführschnecke auf, wobei der Ausführstern schrittweise angetrieben wird und erst aufgrund der Ausführschnecke eine kontinuierliche Bewegung der Behälter erfolgt.

Die JP 2006 096 430 A offenbart eine Vorrichtung mit einem intermittierend und einem kontinuierlich bewegten Rotationskörper, wobei eine Überführungseinrichtung zwischen den beiden Rotationskörpern angeordnet ist und die Überführungseinrichtung mit zwei unterschiedlichen der Bewegung der Rotationskörpern entsprechenden Geschwindigkeiten antreibbar ist.

Aus der DE 10 2006 042 598 A1 ist eine Vorrichtung als eine Prüfmaschine zum Prüfen von Flaschen bekannt und die Ausführeinrichtung hat zwei Riemenförderer zum Ausführen der Behälter aus dem Prozessierungssternrad.

Nachteilig ist, dass die Behälter nach dem Ausführen aus dem Prozessierungssternrad mittels der Ausführeinrichtung gegebenenfalls nicht hinreichend vereinzelt sind. Somit besteht die Gefahr, dass die einzelnen Behälter nicht hinreichend voneinander beabstandet sind und/oder dass der Abstand zwischen den einzelnen Behältern zu stark voneinander abweicht. Insbesondere bei Behältern mit einem polygonen, eckigen, rechteckigen und/oder quadratischen Querschnitt besteht die Gefahr, dass kein hinreichender, reproduzierbarer und/oder gleich großer Abstand zwischen den Behältern realisierbar ist. Hierdurch kann eine nachfolgende Prozessierung und/oder Verarbeitung der Behälter erschwert sein.

Des Weiteren besteht bei bekannten Ausführeinrichtungen die Gefahr, dass der Behälter beim Übergang von der schrittweisen Bewegung im Prozessierungssternrad in die kontinuierliche Bewegung der Ausführeinrichtung in Rotation versetzt wird und/oder zu taumeln beginnt. Hierdurch besteht das Risiko, dass der Behälter in der Ausführeinrichtung und/oder nach dem Verlassen der Ausführeinrichtung umfällt.

Es ist die der Erfindung zugrunde liegende Aufgabe, eine Vorrichtung und ein Verfahren der eingangs genannten Art derart weiterzuentwickeln, dass die Behälter aus dem Prozessierungssternrad mit einem hinreichend großen Abstand und/oder mit einem im Wesentlichen gleichen, insbesondere reproduzierbaren, Abstand mittels der Ausführeinrichtung ausführbar sind. Insbesondere soll die Entstehung einer Eigenrotation und/oder ein Taumeln des Behälters vermieden werden.

Die der Erfindung zugrunde liegende Aufgabe wird mit einer Vorrichtung gemäß Anspruch 1 und einem Verfahren gemäß Anspruch 16 gelöst.

Hierbei ist von Vorteil, dass die Ausführeinrichtung ein Ausführsternrad zum einzelnen Ausführen und/oder zum vorgegeben voneinander getrennten Ausführen der Behälter aus dem Prozessierungssternrad hat. Somit ist mindestens ein Sternrad der Vorrichtung als das Prozessierungssternrad und mindestens ein weiteres Sternrad der Vorrichtung als das Ausführsternrad vorgesehen. Aufgrund des Ausführsternrades ist gewährleistbar, dass die Behälter einzeln und/oder mit einem vorgegebenen, insbesondere reproduzierbaren, Abstand voneinander aus dem Prozessierungssternrad ausgeführt werden. Das Ausführsternrad ermöglicht einen Übergang von der schrittweisen Bewegung des Behälters in die kontinuierliche Bewegung des Behälters, wobei eine unerwünschte Eigenrotation und/oder ein Taumeln des Behälters vermeidbar ist. Vorzugsweise ist das Ausführsternrad an die jeweilige Außenkontur und/oder den Querschnitt des Behälters und/oder an den gewünschten Abstand zwischen den vereinzelten Behältern nach dem Ausführen aus dem Prozessierungssternrad angepasst.

Vorzugsweise sind die Behälter als Hohlglasbehälter, Flaschen, Konserven und/oder Dosen ausgebildet. Die Behälter können einen runden, ovalen, polygonen und/oder eckigen, insbesondere rechteckigen, Querschnitt aufweisen. Insbesondere ist die Vorrichtung als eine Prüfmaschine zum Prüfen von Behältern, vorzugsweise als eine Flaschenprüfmaschine zum Prüfen von Flaschen, ausgebildet. Die Behälter können aus Glas, Kunststoff oder Blech hergestellt sein.

Insbesondere ist das Prozessierungssternrad zum Zuführen jeweils eines einzelnen Behälters zu einer Prozessierungseinrichtung ausgebildet. Das Prozessierungssternrad weist Taschen an seinem Außenumfang auf, wobei jeweils ein einzelner Behälter in einer einzelnen Tasche aufnehmbar ist. Mittels der Taschen können mehrere Behälter in Förderrichtung und/oder Drehrichtung des Prozessierungssternrads, insbesondere koaxial, um eine Drehachse des Prozessierungssternrades geführt werden. Hierbei kann jeweils ein einzelner Behälter einer einzelnen Prozessierungseinrichtung zugeführt werden.

Vorzugsweise ist eine Prozessierungseinrichtung oder sind mehrere Prozessierungseinrichtungen benachbart zum Außenumfang des Prozessierungssternrades und/oder von dem Außenumfang des Prozessierungssternrades beabstandet ortsfest angeordnet. Die mehreren Prozessierungseinrichtungen können mit einem gleichen radialen Abstand zu einer Drehachse des Prozessierungssternrades angeordnet sein. Insbesondere ist eine Prozessierungseinrichtung als Prüfeinrichtung und/oder Rotationseinrichtung für die Behälter ausgebildet. Die Prüfeinrichtung und/oder Rotationseinrichtung kann Sensoren zum Erfassen von vorgegebenen Eigenschaften der Behälter aufweisen. Mittels einer Rotationseinrichtung kann ein Behälter um seine Hochachse innerhalb der Tasche des Prozessierungssternrades rotiert werden. Hierbei kann die Rotation in Abhängigkeit von einer gewünschten Orientierung und/oder Ausrichtung des Behälters in der Tasche erfolgen oder gesteuert werden.

Nach einer weiteren Ausführungsform hat die Ausführeinrichtung eine Führungsschiene. Die Führungsschiene kann zum Zusammenwirken mit dem Ausführsternrad angeordnet und/oder ausgebildet sein. Insbesondere sind zwischen der Führungsschiene und dem Ausführsternrad Behälter führbar. Die Führungsschiene kann als ein Ausführschwert ausgebildet sein. Insbesondere sind die Führungsschiene und das Ausführsternrad derart voneinander beabstandet, dass ein Behälter beim Durchführen durch die Ausführeinrichtung an zwei voneinander abgewandten Seiten des Behälters einerseits an der Führungsschiene und andererseits an dem Ausführsternrad geführt ist. Insbesondere ist die Führungsschiene ortsfest, unbeweglich und/oder stationär befestigt. Vorzugsweise hat die Führungsschiene einen, insbesondere kreissegmentartigen, Führungsbogen. Der Führungsbogen kann eine Umlenkung und/oder Führung der Behälter beim Ausführen aus dem Prozessierungssternrad um bis zu 90° realisieren. Insbesondere ist der Führungsbogen mit einem vorgegebenen radialen Abstand von einer Drehachse des Ausführsternrades beabstandet. Vorzugsweise ist der Führungsbogen mit einem vorgegebenen radialen Abstand vom, insbesondere maximalen, Außenumfang des Ausführsternrades beabstandet. Der maximale Außenumfang des Ausführsternrades kann sich aufgrund des radialen Abstandes von der Dreh- bzw. Mittelachse des Ausführsternrades zu einer Spitze eines Zackens und/oder eines Steges des Ausführsternrades ergeben. Hierdurch ergibt sich zwischen dem Führungsbogen und der Drehachse des Ausführsternrades und/oder dem, insbesondere maximalen, Außenumfang des Ausführsternrades ein definierter bzw. vorgegebener Abstand, der ein gleichzeitiges Führen eines Behälters mit der Führungsschiene und dem Ausführsternrad ermöglicht. Vorzugsweise greift ein Ende der Führungsschiene in einen Bereich eines Außenumfanges des Prozessierungssternrades ein. Hierdurch kann die Führungsschiene einen Behälter hintergreifen und aus dem Prozessierungssternrad führen.

Erfindungsgemäß hat das Ausführsternrad an seinem Außenumfang mehrere gleichmäßig verteilte Aufnahmen zum Aufnehmen und Führen eines einzelnen Behälters. Somit kann in jede Aufnahme jeweils nur ein einzelner Behälter aufgenommen werden. Hierdurch ist ein einzelnes Ausführen der Behälter, insbesondere mit einem vorgegebenen Abstand der Behälter voneinander, realisierbar. Insbesondere sind die Aufnahmen des Ausführsternrades durch den Abstand, die Form und/oder die Geometrie von Zacken, Stegen und/oder Spitzen des Ausführsternrades bestimmt. Vorzugsweise haben die Aufnahmen jeweils einen rampenartigen Einlaufbereich zum Einführen eines einzelnen Behälters in die Aufnahme. Hierdurch ist die Übergabe des Behälters von dem Prozessierungssternrad an das Ausführsternrad bzw. an die Ausführeinrichtung verbessert. Des Weiteren können die Aufnahmen jeweils einen Mitnahmebereich zum Mitführen und/oder Mitnehmen eines einzelnen Behälters haben. Insbesondere gelangt ein einzelner Behälter nach dem Durchlaufen des Einlaufbereiches in den Mitnahmebereich der Aufnahme. Die Gestalt der Aufnahme kann an die Kontur des Behälters angepasst sein. Insbesondere ist die Aufnahme entsprechend der Kontur des Behälters ausgebildet.

Vorzugsweise weisen die Aufnahmen Bürsten und/oder Borsten auf. Die Bürsten und/oder Borsten der Aufnahmen können der Führungsschiene zugewandt ausgerichtet sein. Alternativ oder zusätzlich kann die Führungsschiene und/oder der Führungsbogen Bürsten und/oder Borsten aufweisen. Insbesondere sind die Bürsten und/oder Borsten der Führungsschiene dem Ausführsternrad zugewandt. Vorzugsweise liegen die Bürsten und/oder Borsten beim Führen des Behälters in der Ausführeinrichtung an dem Behälter an. Mittels der Bürsten und/oder Borsten kann eine gewünschte Ausrichtung des Behälters begünstigt oder unterstützt werden.

Erfindungsgemäß sind die Aufnahmen durch Zacken und/oder Stege des Ausführsternrades begrenzt und/oder gebildet. Erfindungsgemäß erstrecken sich die Zacken und/oder Stege des Ausführsternrades in Förderrichtung, insbesondere stromabwärts, geneigt vom Außenumfang des Ausführsternrades weg. Vorzugsweise erstrecken sich die Zacken und/oder Stege des Ausführsternrades rechtwinklig zu einer Drehachse des Ausführsternrades. Der Abstand der Zacken und/oder Stege des Ausführsternrades kann größer sein als der Abstand von Zacken und/oder Stegen des Prozessierungssternrades. Hierdurch ist gewährleistbar, dass der Abstand der einzelnen Behälter voneinander nach dem Ausführen aus dem Prozessierungssternrad größer ist als im Prozessierungssternrad. Die Zacken und/oder Stege des Prozessierungssternrades können Taschen zum Aufnehmen eines einzelnen Behälters bilden. Insbesondere erstrecken sich die Zacken und/oder Stege des Prozessierungssternrades radial und/oder in Förderrichtung, insbesondere stromabwärts, geneigt vom Außenumfang des Prozessierungssternrades weg. Vorzugsweise erstrecken sich die Zacken und/oder Stege des Prozessierungssternrades rechtwinklig zu einer Drehachse des Prozessierungssternrades.

Die Aufnahmen des Ausführsternrades können ein maximales Innenmaß, eine lichte Breite und/oder einen Innendurchmesser im Bereich des 1-fachen bis 1,5-fachen der maximalen Breite und/oder des Außendurchmessers des Behälters aufweisen. Insbesondere entspricht das maximale Innenmaß, die lichte Breite und/oder der Innendurchmesser der Aufnahmen im Wesentlichen der maximalen Breite und/oder dem maximalen Außendurchmesser des Behälters oder ist nur unwesentlich größer. Vorzugsweise beträgt das maximale Innenmaß, die lichte Breite und/oder der Innendurchmesser der Aufnahmen das 1,3-fache der maximalen Breite und/oder des maximalen Außendurchmessers des Behälters.

Die Zacken und/oder Stege des Ausführsternrades können eine stromabwärtige Flanke und eine stromaufwärtige Flanke haben. Vorzugsweise ergibt sich die stromabwärtige und stromaufwärtige Orientierung der Flanken in Bezug auf eine Förderrichtung für die Behälter und/oder eine Drehrichtung des Ausführsternrades um seine Drehachse. Vorzugsweise ergibt sich die Förderrichtung im Bereich der Ausführeinrichtung aufgrund der Drehrichtung des Ausführsternrades um seine Drehachse. Die stromaufwärtige Flanke kann mindestens Bestandteil eines Einlaufbereiches zum Einführen eines einzelnen Behälters in eine einzelne Aufnahme aufweisen. Die stromabwärtige Flanke kann mindestens Bestandteil eines Mitnahmebereiches zum Mitführen und/oder Mitnehmen eines einzelnen Behälters sein. Somit kann eine einzelne Flanke eines Zackens und/oder Steges zum Mitführen und/oder Mitnehmen eines einzelnen Behälters in der Ausführeinrichtung, insbesondere in Zusammenwirkung mit der Führungsschiene, dienen.

Insbesondere ist jeweils eine Aufnahme durch eine stromaufwärtige Flanke eines ersten Zackens und/oder Steges und eine stromabwärtige Flanke eines zweiten Zackens und/oder Steges gebildet, wobei der erste Zacken und/oder Steg in Bezug auf den zweiten Zacken und/oder Steg stromabwärts angeordnet ist. Mit anderen Worten ist der zweite Zacken und/oder Steg stromaufwärts von dem ersten Zacken und/oder Steg angeordnet.

Vorzugsweise bestimmt der Abstand der Zacken und/oder eine Breite der Zacken des Ausführsternrades den Abstand von einzelnen Behältern nach dem Ausführen aus der Vorrichtung mittels der Ausführeinrichtung. Die Behälter können von der Ausführeinrichtung einer Fördereinrichtung oder einem Förderband zugeführt werden. Mittels der Fördereinrichtung können die Behälter einer weiteren Prozessierung und/oder Verarbeitung zugeführt werden. Insbesondere ist in Förderrichtung nach der Ausführeinrichtung mindestens eine Bearbeitungseinrichtung angeordnet. Diese Bearbeitungseinrichtung kann zum Durchleuchten, zum Prüfen, zum Vermessen und/oder zum wahlweisen Auswerfen eines einzelnen Behälters ausgebildet sein. Insbesondere wenn mittels einer dem Prozessierungssternrad zugeordneten Prozessierungseinrichtung ein Materialfehler bei einem einzelnen Behählter festgestellt wurde, kann der fehlerhafte Behälter mittels einer geeignet ausgebildeten Bearbeitungseinrichtung nach dem Durchlaufen der Ausführeinrichtung ausgeworfen werden.

Nach einer eigenständigen und auch unabhängig von der vorliegenden Erfindung denkbaren Ausführungsform ist die Bearbeitungseinrichtung zum Auswerfen eines einzelnen Behälters ausgebildet. Insbesondere weist die Bearbeitungseinrichtung ein bewegbares Auswurfelement auf. Das Auswurfelement kann ein freies Ende aufweisen, mit dem ein Behälter ausgeworfen und/oder von einer Fördereinrichtung gestoßen werden kann. Das Auswurfelement kann als ein Stößel ausgebildet sein und/oder das freie Ende des Auswurfelementes kann eine Stoßkappe aufweisen. Vorzugsweise ist das Auswurfelement geradlinig und/oder linear bewegbar. Die Bewegbarkeit des Auswurfelementes kann mittels eines Auswurfantriebes realisierbar sein. Insbesondere ist der Auswurfantrieb als ein Linearantrieb ausgebildet. Vorzugsweise ist der Auswurfantrieb, das Auswurfelement und/oder eine Bewegung des Auswurfelementes mittels einer Steuerung gesteuert. Insbesondere erfolgt die Steuerung in Abhängigkeit von einer Steuerung der Vorrichtung, des Prozessierungssternrades und/oder des Ausführsternrades.

Vorzugsweise ist das Auswurfelement entlang einer geraden Bewegungslinie und/oder einer geradlinigen Führung bewegbar, die sich schräg von oben nach unten in Richtung des Behälters erstreckt. Die Bewegungslinie und/oder die Führung für das Auswurfelement kann quer, insbesondere rechtwinklig, zu einer Förderrichtung für den Behälter ausgerichtet sein. Insbesondere ist die Bewegungslinie und/oder die Führung für das Auswurfelement und zum Auswerfen des Behälters schräg zu einer Horizontalen von oben nach ausgerichtet. Die Bewegungslinie und/oder die Führung für das Auswurfelement kann in einem Bereich von 10° bis 45° zu einer Horizontalen nach unten ausgerichtet sein. Insbesondere ist die Bewegungslinie und/oder die Führung für das Auswurfelement mit einem Winkel im Bereich von 20° bis 25°, vorzugsweise mit einem Winkel von 20° oder 25°, zu einer Horizontalen schräg nach unten ausgerichtet. Die Ausrichtung des Auswurfelementes und/oder der Winkel kann, insbesondere stufenlos und/oder automatisch gesteuert, einstellbar sein. Vorzugsweise ist das Auswurfelement hinsichtlich seiner Höhe einstellbar. Das Auswurfelement kann an einer Tragstruktur in unterschiedlichen Höhen in Bezug zu einer Fördereinrichtung für die Behälter und/oder in Bezug zu einem Behälter angeordnet werden.

Der Winkel des Auswurfelementes zur Horizontalen, die Höhe des Auswurfelementes und/oder eine Position eines Treffpunktes des Auswurfelementes mit einem Behälter kann in Abhängigkeit von der Geometrie, Gestalt und/oder einem Schwerpunkt des Behälters berechnet werden. Insbesondere wird in Abhängigkeit von der Geometrie, Gestalt und/oder dem Schwerpunkt des Behälters ein Bewegungsprofil für das Auswurfelement, insbesondere mittels einer Recheneinheit und/oder Steuerung, berechnet. Das Bewegungsprofil ist mittels einer Steuerung und/oder einem Linearantrieb für das Auswurfelement umsetzbar. Somit kann die Bearbeitungseinrichtung und/oder das Auswurfelement für verschieden gestaltete Behälter optimal angepasst werden. Insbesondere weist das Bewegungsprofil die Ausrichtung des Auswurfelementes, die Position des Auswurfelementes und/oder ein Geschwindigkeitsprofil für die Bewegung des Auswurfelementes auf. Mittels des mit einem Linearantrieb antreibbaren Auswurfelementes kann ein Behälter besonders effektiv und/oder reproduzierbar zum Auswerfen beschleunigt werden. Auf ein Auswerfen mittels Luft, beispielsweise in Gestalt eines Luftstoßes, kann verzichtet werden.

Gemäß einer Weiterbildung ist das Ausführstemrad mit einem Ausführantrieb zum, insbesondere kontinuierlichen, Antreiben des Ausführsternrades verbunden. Vorzugsweise ist das Prozessierungssternrad mit einem Prozessierungssternantrieb zum Antreiben des Prozessierungssternrades verbunden. Der Antrieb des Prozessierungssternrades kann schrittweise und/oder getaktet erfolgen. Insbesondere ist das Prozessierungssternrad mittels des Prozessierungssternantriebes in eine schrittweise Drehbewegung versetzbar. Somit dreht das Prozessierungssternrad jeweils einen vorgegebenen Schritt weiter und steht anschließend für eine vorgegebene Zeit still. In einer solchen Ruhestellung kann eine Prozessierung und/oder Prüfung des Behälters mit einer, insbesondere als Prüfeinrichtung ausgebildeten, Prozessierungseinrichtung erfolgen. Ein Behälter kann mittels des Ausführsternrades aus einer schrittweisen Drehbewegung in eine kontinuierliche Bewegung, insbesondere mit einer kontanten Bewegung und/oder Geschwindigkeit, überführt werden. Vorzugsweise ist eine Steuerung zum Ansteuern des Ausführantriebes und/oder des Prozessierungssternantriebes vorgesehen. Insbesondere ist die Steuerung zum Ansteuern des Prozessierungssternantriebes in Abhängigkeit vom Ausführantrieb und/oder einem Zuführantrieb vorgesehen. Der Zuführantrieb kann einer Zuführeinrichtung zugeordnet sein, die dem Prozessierungssternrad die Behälter zuführt. Insbesondere werden der Ausführantrieb, der Prozessierungssternantrieb und/oder der Zuführantrieb mittels der Steuerung synchronisiert.

Nach einer eigenständigen und auch unabhängig von der vorliegenden Erfindung denkbaren Ausführungsform verbindet eine Antriebsachse einen Prozessierungssternantrieb mit dem Prozessierungssternrad. Insbesondere kann eine, vorzugsweise weitere, Antriebsachse einen Ausführantrieb mit dem Ausführsternrad verbinden. Vorzugsweise hat die Antriebsachse einen polygonen Querschnitt. Beispielsweise kann die Antriebsachse als eine Polygonwelle ausgebildet sein. Bei einer Polygonwelle bzw. einer Antriebsachse mit einem polygonen Querschnitt ist von Vorteil, dass ein unerwünschtes Spiel zwischen der Antriebsachse und dem Antrieb und/oder dem Prozessierungssternrad oder Ausführsternrad erheblich reduzierbar ist. Hierdurch ist ein fehlerfreies Einführen und/oder Ausführen der Behälter bezüglich des Prozessierungssternrades und/oder des Ausführsternrades begünstigt. Insbesondere sind bei einer derartigen Antriebsachse Passfedern verzichtbar, wodurch die Zuverlässigkeit beim Ausführen und/oder Einführen der Behälter bezüglich des Prozessierungssternrades und/oder des Ausführsternrades verbessert ist. Mittels einer im Querschnitt polygonen Antriebsachse bzw. einer Polygonwelle für den Prozessierungssternantrieb kann der Prozessierungssternrad und/oder mindestens ein Behälter präzise für und/oder in einer Stillstandsphase des Prozessierungssternrades positioniert werden. In einer Stillstandsphase steht das Prozessierungssternrad still und ist unbewegt. Insbesondere bei einer getakteten und/oder schrittweisen Bewegung des Prozessierungssternrads wechseln sich Stillstandsphasen und Bewegungsphasen des Prozessierungssternrades und/oder mindestens eines Behälters ab. Aufgrund der präzisen Positionierbarkeit kann der mindestens eine Behälter besonders präzise und/oder reproduzierbar einer Prozessierungseinrichtung zugeführt werden. Vorzugsweise erfolgt eine Bearbeitung und/oder Prüfung des Behälters mittels einer Prozessierungseinrichtung während einer Stillstandsphase des Prozssierungssternrades. Insbesondere erfolgt die getaktete und/oder schrittweise Bewegung des Prozessierungssternrades in eine einzige, vorgegebene Drehrichtung.

Vorzugsweise weist die Antriebsachse, der Prozessierungssternantrieb und/oder der Ausführantrieb ein versteiftes Gehäuse auf. Hierdurch wird die Gefahr eines unerwünschten Spiels zwischen der Antriebsachse, dem Ausführantrieb, dem Prozessierungssternantrieb, dem Ausführsternrad und/oder dem Prozessierungssternrad weiter reduziert. Die Antriebsachse kann, insbesondere in Verbindung mit dem Prozessierungssternantrieb und/oder dem Ausführantrieb, eine integrierte Kupplung aufweisen. Bei einer Überlastung, insbesondere aufgrund einer Fehlfunktion, dient die Kupplung zum Trennen der Antriebsachse vom Prozessierungssternantrieb und/oder dem Ausführantrieb. Vorzugsweise hat die Antriebsachse mit dem polygonen Querschnitt und/oder die polygone Welle eine hinsichtlich des Querschnittes im Wesentlichen dreiseitige Grundform. Eine derartige dreiseitige und/oder dreieckige Grundform hinsichtlich des Querschnittes lässt sich ähnlich einfach und kostengünstig herstellen wie übliche Antriebsachsen mit rundem Querschnitt, ermöglicht im Vergleich hierzu jedoch eine spielfreiere Konstruktion.

Nach einer ebenfalls eigenständig und unabhängig von der vorliegenden Erfindung denkbaren Ausführungsform der Erfindung ist eine Zuführeinrichtung zum Vereinzeln der Behälter und zum Zuführen der Behälter zum Prozessierungssternrad vorgesehen. Mittels der Zuführeinrichtung sind die Behälter aus einer kontinuierlichen Reihe oder Gruppe von Behältern vereinzelbar und jeweils ein einzelner Behälter ist in eine Tasche des Prozessierungssternrades einführbar. Insbesondere wird eine Menge aus mehreren Behältern der Zuführeinrichtung mit einem Förderband zugeführt. Vorzugsweise weist die Zuführeinrichtung mindestens eine Schneckenwelle auf. Insbesondere ist die Schneckenwelle mittels eines Zuführantriebs antreibbar. Vorzugsweise ist der Zuführantrieb zum Antreiben der Schneckenwelle mittels einer Steuerung steuerbar. Insbesondere ist die Schneckenwelle um ihre Längsachse rotierbar bzw. antreibbar gelagert. Die Steuerung kann den mindestens einen Zuführantrieb der Schneckenwelle und einen Prozessierungssternantrieb des Prozessierungssternrades derart ansteuern, dass die Schneckenwelle jeweils einen einzelnen Behälter synchron mit der Drehbewegung des Prozessierungssternrades jeweils in eine offene Tasche des Prozessierungssternrades einführt.

Die Schneckenwelle kann einen sich in Förderrichtung vergrößernden Kerndurchmesser, Nenndurchmesser und/oder sich vergrößernde Gangabstände aufweisen. Vorzugsweise nimmt die Steigung der Schneckenwelle in Förderrichtung zu. Insbesondere kann die Schneckenwelle eine im Wesentlichen konische Gestalt aufweisen, wobei vorzugsweise sich der Nenndurchmesser und/oder Kerndurchmesser der Schneckenwellen, insbesondere in Bezug auf eine Förderrichtung, stromabwärts vergrößert. Hierdurch ist ein vorgegebener Abstand zwischen den vereinzelten Behältern realisierbar, wobei vorzugsweise dieser Abstand an den Abstand der Taschen, Zacken und/oder Stegen des Prozessierungssternrades angepasst ist. Hierdurch wird eine fehlerfreie Übergabe der Behälter von der Zuführeinrichtung an das Prozessierungssternrad verbessert.

Gemäß einer weiteren auch eigenständig und unabhängig von der vorliegenden Erfindung denkbaren Ausführungsform weist die Zuführeinrichtung eine erste Schneckenwelle und mindestens eine weitere Schneckenwelle auf. Somit kann eine erste Schneckenwelle und eine zweite Schneckenwelle vorhanden sein. Die erste Schneckenwelle und die weitere Schneckenwelle können im Wesentlichen parallel zueinander und/oder übereinander angeordnet sein. Vorzugsweise sind die erste Schneckenwelle und die weitere Schneckenwelle voneinander beabstandet. Insbesondere ist die erste Schneckenwelle zum Zusammenwirken mit einem Behälterkörper des Behälters und die weitere Schneckenwelle zum Zusammenwirken mit einen Behälterhals des Behälters ausgebildet. Der Behälterkörper kann ein Flaschenkörper oder Flaschenbauch sein. Der Behälterhals kann als ein Flaschenhals ausgebildet sein. Vorzugsweise sind die erste Schneckenwelle und die weitere Schneckenwelle mit voneinander abweichenden Rotationsgeschwindigkeiten antreibbar. Hinsichtlich ihrer Position zueinander können die erste Schneckenwelle und die weitere Schneckenwelle verstellbar sein. Insbesondere ist ein Abstand zwischen der ersten Schneckenwelle und der weiteren Schneckenwelle einstellbar.

Die Schneckenwelle kann mittels eines Zuführantriebes angetrieben werden. Vorzugsweise ist der Zuführantrieb mittels eines Riemens mit einem drehfest mit der Schneckenwelle verbundenen Rad verbunden. Der Riemen kann als ein Zahnriemen und das Rad als ein Zahnrad ausgebildet sein. Alternativ zu einem Riemen kann eine Kette oder jedes andere endlose Strangelement eingesetzt werden. Vorzugsweise ist eine Treibachse des Zuführantriebes mit einer Achse der Schneckenwelle verbunden. Somit lässt sich ein besonders einfacher Aufbau einer Verbindung zwischen Zuführantrieb und Schneckenwelle und zum Übertragen der Antriebskraft von dem Zuführantrieb auf die Schneckenwelle realisieren. Insbesondere ist ein erster Zuführantrieb mit einer ersten Schneckenwelle und ein weiterer Zuführantrieb mit der weiteren Schneckenwelle verbunden. Hierdurch ist eine Veränderung der Positionen der beiden Schneckenwellen zueinander erleichtert. Zudem sind mittels zweier separater Zuführantriebe unterschiedliche Rotationsgeschwindigkeiten für die beiden Schneckenwellen einstellbar.

Vorzugweise hat die Zuführeinrichtung eine von der Schneckenwelle beabstandete Gegenführung zum Führen von Behältern zwischen der Schneckenwelle und der Gegenführung. Hierdurch ist ein definiertes Vereinzeln der Behälter zum Zuführen eines einzelnen Behälters in eine Aufnahme des Prozessierungssternrades erleichtert. Die Gegenführung kann mehrere in Förderrichtung aufeinander folgende Führungsstempel aufweisen. Die Führungsstempel können jeweils beweglich gelagert sein. Insbesondere sind die Führungsstempel jeweils einzeln federnd gelagert. Somit ist nicht eine einzelne federnde Lagerung der gesamten Gegenführung vorgesehen, sondern jeder Führungsstempel der Gegenführung ist unabhängig von den weiteren Führungsstempeln einzeln federnd gelagert. Hierdurch ist eine fehlerfreie Vereinzelung der Behälter mittels der Zuführeinrichtung verbessert. Vorzugsweise sind die Führungsstempel in eine Richtung quer, insbesondere rechtwinklig, zur Längsachse der Schneckenwelle beweglich. Im Gegensatz zu einer Gegenführung mit einem einzigen federnd gelagerten Gegenelement kann bei der Verwendung von mehreren federnd gelagerten Führungsstempeln der Gegendruck oder der Federdruck reduziert werden. Hierdurch ist eine Art Flimmern der Gegenführung vermeidbar.

Vorzugsweise haben die Führungsstempel jeweils eine sich in Förderrichtung und/oder stromabwärts rampenartig ansteigende Anlagefläche, die der Schneckenwelle zugewandt ist. Hierdurch können die Behälter zwischen der Schneckenwelle und der Gegenführung in Richtung der Schneckenwelle, insbesondere mit einer stromaufwärtigen und/oder der Förderrichtung entgegen gerichteten Komponente, gedrückt werden. Dadurch ist die fehlerfreie Vereinzelung der Behälter noch weiter verbessert. Des Weiteren kann die Gegenführung einen starren Führungsabschnitt aufweisen. Der starre Führungsabschnitt kann schienenartig ausgebildet sein und/oder zwischen einem Bereich mit den Führungsstempeln und dem Prozessierungssternrad angeordnet sein. Bei einer Fehlstellung eines Behälters im Bereich der Führungsstempel bleibt die Lage und/oder die Zufuhr eines sich bereits im Bereich des starren Führungsabschnittes befindenden Behälters unbeeinflusst. Die Führungsstempel, die Anlagefläche und/oder der starre Führungsabschnitt kann aus Kunststoff hergestellt sein. Insbesondere ist eine Kontaktfläche zum Kontaktieren der Behälter aus Kunststoff gebildet. Die Verwendung von Kunststoff reduziert die Gefahr von Beschädigungen des Behälters. Aufgrund der Verwendung von mehreren federnd gelagerten Führungsstempeln ist ein Einführen und/oder ein Einlaufen der Behälter in das Prozessierungssternrad verbessert.

Gemäß einer Weiterbildung weist mindestens ein Führungsstempel mindestens einen Sensor zum Erfassen der Auslenkung des Führungsstempels auf. Mittels des Sensors ist eine Fehlstellung und/oder Fehllagerung eines Behälters feststellbar. Vorzugsweise ist der mindestens eine Sensor mit einer Steuerung verbunden. Wird mittels des Sensors eine Auslenkung des Führungsstempels festgestellt, die einen vorgegebenen Schwellwert übersteigt, interpretiert die Steuerung dies als eine Fehllagerung des Behälters in der Zuführeinrichtung. Daraufhin wird der Zuführantrieb der Zuführeinrichtung und/oder sämtliche Antriebe der Vorrichtung gestoppt. Gleichzeitig kann eine visuelle und/oder akustische Fehlermeldung erfolgen. Hierdurch wird eine Beschädigung der Vorrichtung verhindert. Insbesondere weist die Gegenführung zwei bis zwölf Führungsstempel, vorzugsweise vier bis acht Führungsstempel, besonders bevorzugt sechs Führungsstempel, auf. Vorzugsweise haben mindestens zwei Führungsstempel jeweils einen Sensor zum Erfassen der Auslenkung des jeweiligen Führungsstempels.

Insbesondere sind die mehreren Führungsstempel quer, vorzugsweise rechtwinkelig, zur Förderrichtung beweglich und/oder federnd gelagert. Insbesondere sind die Führungsstempel in einer Ebene parallel zur Ebene des Prozessierungssternrades angeordnet. Hierbei können die Führungsstempel jeweils eine Einstelleinrichtung zum Einstellen der Beweglichkeit und/oder der Federkraft aufweisen. Beispielsweise kann die Einstelleinrichtung eine Gewindestange aufweisen, an deren einem Ende ein Führungsstempel befestigt ist. An einem von dem Führungsstempel abgewandten Ende der Gewindestange kann eine in Längsrichtung der Gewindestange verschiebbare und festsetzbare Anschlageinrichtung angeordnet sein. Vorzugsweise ist zwischen der Anschlageinrichtung und dem Führungsstempel sowie die Gewindestange umgebend eine Spiralfeder angeordnet. Durch Verstellen der Anschlageinrichtung in Längsrichtung der Gewindestange ist die Federkraft der Spiralfeder, die auf den Führungsstempel wirkt, einstellbar.

Gemäß einer Weiterbildung sind eine erste Fördereinrichtung zum Zuführen mindestens eines Behälters zum Prozessierungssternrad, insbesondere zu einer Zuführeinrichtung, und eine zweite Fördereinrichtung zum Ausführen des Behälters aus dem Prozessierungssternrad, insbesondere dem Ausführsternrad, vorhanden. Somit können die Behälter mittels üblicher Fördereinrichtungen der Vorrichtung zugeführt und aus dieser ausgeführt werden. Vorzugsweise sind die erste Fördereinrichtung und die zweite Fördereinrichtung mit unterschiedlichen Fördergeschwindigkeiten betreibbar. Insbesondere ist die zweite Fördereinrichtung mit einer im Vergleich zur ersten Fördereinrichtung höheren oder niedrigeren Geschwindigkeit antreibbar. Hierdurch können die Behälter mit unterschiedlichen Geschwindigkeiten in die Vorrichtung eingeführt und aus der Vorrichtung ausgeführt werden. Vorzugsweise werden die Behälter aufgrund einer höheren Geschwindigkeit der zweiten Fördereinrichtung mit einer höheren Geschwindigkeit abgeführt als diese in die Vorrichtung mit der ersten Fördereinrichtung zugeführt werden. Dadurch ist ein größerer Abstand zwischen den ausgeführten und/oder abgeführten Behältern realisierbar, wodurch eine nachfolgende Prozessierung, Verarbeitung und/oder Prüfung von einzelnen Behältern vereinfacht ist. Insbesondere ist die erste Fördereinrichtung und/oder die zweite Fördereinrichtung als ein Förderband zum Abstellen des Behälters ausgebildet. Derartige, vorzugsweise waagerecht verlaufende, Förderbänder haben sich zum Transport von Behälter, beispielsweise Hohlglasbehältern oder Flaschen, bewährt. Hierbei können die Behälter von seitlichen Führungsschienen geführt werden.

Gemäß einer weiteren auch eigenständig und unabhängig von der vorliegenden Erfindung denkbaren Ausführungsform ist eine Prozessierungseinrichtung zum Bestimmen absoluter Messwerte in Bezug zu einem einzelnen Behälter ausgebildet. Somit sind nicht nur rein qualitative, sondern auch quantitative Werte bestimmbar. Insbesondere weist die Prozessierungseinrichtung einen Linearantrieb auf. Die Prozessierungseinrichtung kann einen Prüf- und/oder Messkopf aufweisen. Mittels des Linearantriebes ist der Prüf- und/oder Messkopf translatorisch bzw. entlang einer geraden Linie verfahrbar. Des Weiteren kann die Prozessierungseinrichtung mindestens einen, vorzugsweise magnetischen, Wegsensor, Positionssensor und/oder Positionsgeber aufweisen. Mittels des Wegsensors, Positionssensors und/oder Positionsgebers kann ein Verfahrweg und/oder eine Position des Prüf- und/oder Messkopfes bestimmt werden. Auf der Basis der entsprechenden Daten des Wegsensors, Positionssensors und/oder Positionsgebers können Messwerte für den jeweils geprüften Behälter, insbesondere mittels einer Steuerung oder Recheneinheit, berechnet werden. Vorzugsweise hat die Prozessierungseinrichtung eine verfahrbare Innenlehre und/oder eine verfahrbare Außenlehre zum Messen einer Höhe des Behälters, eines Außendurchmessers und/oder eines Innendurchmessers einer Öffnung des Behälters. Der Prüf- und/oder Messkopf kann die Innenlehre und/oder die Außenlehre aufweisen. Die Innenlehre und die Außenlehre können gemeinsam oder unabhängig voneinander verfahren werden. Die Innenlehre kann mindestens teilweise in die Öffnung, insbesondere in einen Behälterhals oder Flaschenhals, hineinfahren.

Der Prüfkopf, der Messkopf, die Innenlehre und/oder die Außenlehre kann jeweils eine eigene Prüffeder aufweisen. Sobald der Prüfkopf, der Messkopf, die Innenlehre und/oder die Außenlehre auf einen Widerstand trifft, verursacht dies ein Zusammenstauchen der Prüffeder. Dieses Zusammenstauchen kann mittels geeigneter Sensoren erfasst und die entsprechenden Daten einer Auswertung, Steuerung und/oder Recheneinheit zugeführt werden. Insbesondere ist ein Ablösen des Prüfkopfes, des Messkopfes, der Innenlehre und/oder der Außenlehre von dem Behältnis bei einem Zurückfahren des Linearantriebes aufgrund der Prüffeder verbessert oder erleichtert.

Vorzugsweise ist jeweils dem Linearantrieb, dem Prüf- und/oder Messkopf, der Innenlehre und/oder der Außenlehre ein Wegsensor, Positionssensor und/oder Positionsgeber zugeordnet. Hierdurch können verschiedene Messergebnisse für einen einzelnen Behälter ermittelt und anschließend verarbeitet bzw. ausgewertet werden.

Insbesondere ist der Linearantrieb der Prozessierungseinrichtung für eine vertikale Bewegbarkeit und/oder Verstellbarkeit, insbesondere des Prüf- und/oder Messkopfes, der Innenlehre und/oder der Außenlehre, ausgebildet. Vorzugsweise hat die Prozessierungseinrichtung und/oder der Linearantrieb eine Gegenkrafteinrichtung zum Ausgleich einer Gewichtskraft. Somit kann ein in vertikaler Richtung beweglicher Teil der Prozessierungseinrichtung in Bezug zu seiner Gewichtskraft in einem Kräftegleichgewicht gehalten werden. Hierdurch ist die notwendige Haltekraft und/oder Antriebskraft des Linearantriebes reduzierbar bzw. der Linearantrieb muss nicht gegen die Gewichtskraft des beweglichen Teils der Prozessierungseinrichtung arbeiten. Insbesondere weist die Gegenkrafteinrichtung ein Federelement und/oder eine magnetische Feder auf.

Nach einer weiteren auch eigenständig und unabhängig von der vorliegenden Erfindung denkbaren Ausführungsform ist die Ausführeinrichtung mit dem Ausführsternrad, die Antriebsachse mit einem polygonen Querschnitt, die Prozessierungseinrichtung und/oder die Zuführeinrichtung mit einer Gegenführung, die mehrere Führungsstempel aufweist, als ein Nachrüstsatz für bestehende Vorrichtungen denkbar. Hierbei ist von Vorteil, dass bestehende Vorrichtungen mindestens teilweise mit der Ausführeinrichtung, der Antriebsache, der Prozessierungseinrichtung und/oder der Zuführeinrichtung nachgerüstet werden können, wodurch die Kosten für eine vollständige Neuanschaffung einer Vorrichtung vermeidbar sind.

Nachfolgend wird die Erfindung anhand der Figuren näher erläutert. Es zeigen:
- Fig. 1: eine schematische Draufsicht auf eine erfindungsgemäße Vorrichtung,
- Fig. 2: einen Ausschnitt der erfindungsgemäßen Vorrichtung gemäß Fig. 1 mit einer Ausführeinrichtung,
- Fig. 3: einen Ausschnitt der erfindungsgemäßen Vorrichtung gemäß Fig. 1 mit einer Zuführeinrichtung,
- Fig. 4: eine perspektivische Seitenansicht einer Antriebsachse für eine erfindungsgemäße Vorrichtung
- Fig. 5: eine perspektivische Seitenansicht einer Prozessierungseinrichtung für eine erfindungsgemäße Vorrichtung,
- Fig. 6: eine erste geschnittene Seitenansicht der Prozessierungseinrichtung gemäß Fig. 5,
- Fig. 7: eine weitere geschnittene Seitenansicht der Prozessierungseinrichtung gemäß Fig. 5
- Fig. 8: eine perspektivische Seitenansicht einer Bearbeitungseinrichtung, und
- Fig. 9: eine Seitenansicht der Bearbeitungseinrichtung gemäß Fig. 8.

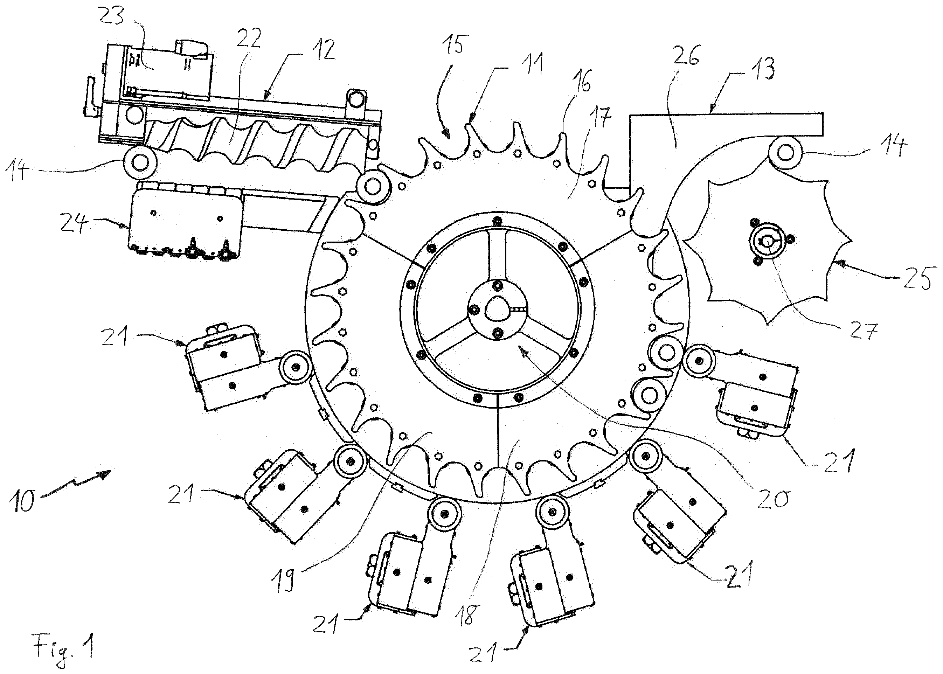

Fig. 1 zeigt eine schematische Draufsicht auf eine erfindungsgemäße Vorrichtung 10. Die Vorrichtung 10 weist ein Prozessierungssternrad 11, eine Zuführeinrichtung 12 und eine Ausführeinrichtung 13 auf. Bei diesem Ausführungsbeispiel ist die Vorrichtung 10 als eine Flaschenprüfmaschine ausgebildet. Mittels der Zuführeinrichtung 12 werden Behälter 14 vereinzelt und jeweils einzelner Behälter 14 in eine Tasche 15 des Prozessierungssternrades 11 eingeführt. Hierbei sind mehrere Taschen 15 am Außenumfang des Prozessierungssternrades 11 angeordnet. Die Taschen 15 des Prozessierungssternrades 11 sind durch Zacken 16 des Prozessierungssternrades 11 gebildet. Bei diesem Ausführungsbeispiel sind die Taschen 15 im Wesentlichen U-förmig. Für eine bessere Übersichtlichkeit sind nicht alle Behälter 14, Taschen 15 und Zacken 16 mit einem Bezugszeichen versehen.

Die Zacken 16 erstrecken sich im Bereich des Außenumfanges des Prozessierungssternrades 11 radial vom Prozessierungssternrad 11 weg und sind bei diesem Ausführungsbeispiel leicht in Förderrichtung bzw. stromabwärts geneigt ausgerichtet. Die Taschen 15 und Zacken 16 sind derart ausgebildet, dass diese den durch den Behälter 14 vorgegebenen Querschnitt der Behälter 14 aufnehmen können. Die Tasche 15 umgreift etwa die Hälfte des Querschnittes eines in die Tasche 15 eingeführten Behälters 14. Hierbei liegt der Behälter 14 im Bereich der Tasche 15 mindestens teilweise an der Tasche 15 an. Bei diesem Ausführungsbeispiel sind die Behälter 14 als Flaschen mit einem runden Querschnitt ausgebildet.

Das Prozessierungssternrad 11 ist bei diesem Ausführungsbeispiel aus drei gleichartig ausgebildeten Ringsegmenten 17, 18, 19 gebildet. In der Mitte des Prozessierungssternrades 11 ist eine Achsaufnahme 20 angeordnet. Die Achsaufnahme 20 dient zum Befestigen des Prozessierungssternrades 11 an einer hier nicht näher dargestellten Antriebsachse. Bei diesem Ausführungsbeispiel ist die Achsaufnahme 20 zum Befestigen an einer Polygonwelle mit einer im Wesentlichen dreiseitigen Grundform ausgebildet.

Um den Außenumfang des Prozessierungssternrades 11 und radial zum Prozessierungssternrad 11 beabstandet sind bei diesem Ausführungsbeispiel mehrere Prozessierungseinrichtungen 21 angeordnet. Hier sind beispielhaft sechs Prozessierungseinrichtungen 21 vorgesehen. Alternativ hierzu können auch mehr oder weniger Prozessierungseinrichtungen 21 vorgesehen sein. Hier sind die Prozessierungseinrichtungen 21 beispielhaft als Rotationseinheiten ausgebildet, mit denen die Behälter 14 in den Taschen 15 in einer vorgegebenen Weise um ihre Mittelachse oder Hochachse rotierbar sind. Alternativ oder zusätzlich können die Prozessierungseinrichtungen 21 Sensoreinrichtungen zum Prüfen von vorgegebenen Eigenschaften der Behälter 14 aufweisen. Die Prozessierungseinheiten 21 sind unabhängig von dem Prozessierungssternrad 11 und in Bezug zum Prozessierungssternrad 11 unbeweglich bzw. stationär befestigt. Somit ist das Prozessierungssternrad 11 in Relation zu den örtlich fest gelegten Prozessierungseinrichtungen 21 bewegbar.

Die Zuführeinrichtung 12 weist eine Schneckenwelle 22 auf, die mittels eines Zuführantriebes 23 antreibbar ist. Hierbei ist die Schneckenwelle 22 um ihre Längsachse mittels des Zuführantriebes 23 rotierbar. Des Weiteren weist die Zuführeinrichtung 12 eine Gegenführung 24 auf. Die Gegenführung 24 und die Schneckenwelle 22 sind hinsichtlich ihrer Längsachsen im Wesentlichen parallel zueinander angeordnet und zum Führen eines Behälters 14 zwischen der Schneckenwelle 22 und der Gegenführung 24 voneinander beabstandet.

Die Ausführeinrichtung 13 weist ein Ausführsternrad 25 und eine Führungsschiene 26 auf. Das Ausführsternrad 25 ist um eine Drehachse 27 mittels eines hier nicht näher dargestellten Ausführantriebes rotierbar. Das Ausführsternrad 25, die Führungsschiene 26 und das Prozessierungssternrad 11 sind derart zueinander angeordnet, dass ein Behälter 14 zwischen dem Ausführsternrad 25 und der Führungsschiene 26 aus einer Tasche 15 des Prozessierungssternrades 11 herausführbar ist. Das Ausführsternrad 25 hat einen kleineren Durchmesser als das Prozessierungssternrad 11. Hier ist der Durchmesser des Ausführsternrades 25 etwa halb so groß wie der Durchmesser des Prozessierungssternrades 11.

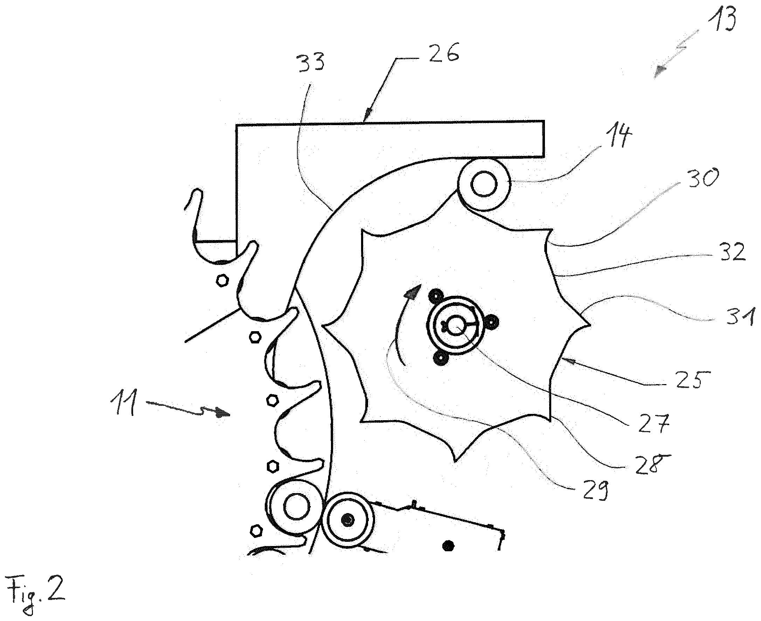

Fig. 2 zeigt einen Ausschnitt der Vorrichtung 10 gemäß Fig. 1 mit der Ausführeinrichtung 13. Das Ausführsternrad 25 weist mehrere gleichmäßig an seinem Außenumfang verteilte Zacken 28 auf. Bei diesem Ausführungsbeispiel sind acht Zacken 28 vorgesehen, wobei für eine bessere Übersichtlichkeit nicht sämtliche Zacken 28 mit einem Bezugszeichen versehen sind. Die Zacken 28 erstrecken sich vom Außenumfang des Ausführsternrades 25 bzw. radial von dem Ausführsternrad 25 weg und sind leicht in Förderrichtung bzw. stromabwärts geneigt ausgerichtet.

Die Drehrichtung des Ausführsternrades 25 ergibt sich gemäß Pfeil 29. Entsprechend ergibt sich gemäß Pfeil 29 auch die Förderrichtung für den Behälter 14 aus dem Prozessierungssternrad 11. Eine gemäß Pfeil 29 in Förderrichtung bzw. stromabwärts gerichtete Flanke der Zacken 28 ist jeweils Bestandteil eines Mitnahmebereiches 30 des Ausführsternrades 25. Zum Ausführen aus dem Prozessierungssternrad 11 und zum Durchführen durch die Ausführeinrichtung 13 liegt der Behälter 14 an dem Mitnahmebereich 30 an.

An einer von der Förderrichtung gemäß Pfeil 29 weg gewandten bzw. stromaufwärts gerichteten Flanke weisen die Zacken 28 des Ausführsternrades 25 jeweils einen Einlaufbereich 31 auf. Der Einlaufbereich 31 eines vorangehenden Zackens 28 bildet zusammen mit dem Mitnahmebereich 30 eines bezüglich der Förderrichtung gemäß Pfeil 29 nachfolgenden Zackens 28 jeweils eine Aufnahme 32. Der Abstand zwischen zwei benachbarten Zacken 28 bestimmt den Abstand der Behälter 14 innerhalb der Ausführeinrichtung 13 und nach dem Verlassen der Ausführeinrichtung 13. Die Kontur der Zacken 28 bzw. der Aufnahme 32 kann an die Gestalt bzw. den Querschnitt des zu verarbeitenden Behältnisses 14 angepasst sein.

Die Führungsschiene 26 hat einen Führungsbogen 33. Der Führungsbogen 33 ist mit einem konstanten radialen Abstand von der Drehachse 27 beabstandet. Hierdurch ergibt sich zwischen dem Führungsbogen 33 und dem Außenumfang des Ausführsternrades 25 ein vorgegebener Abstand, der ein gleichzeitiges Führen eines Behälters 14 an dem Führungsbogen 33 und dem Außenumfang des Ausführsternrades 25, nämlich dem Mitnahmebereich 30, ermöglicht. Bei diesem Ausführungsbeispiel ist der Führungsbogen 33 zum Umlenken der Behälter 14 um 90° ausgebildet. Hierzu ragt die Führungsschiene 26 unterhalb der Ebene des Prozessierungssternrades 11 in den Bereich des Außenumfanges des Prozessierungssternrades 11 hinein.

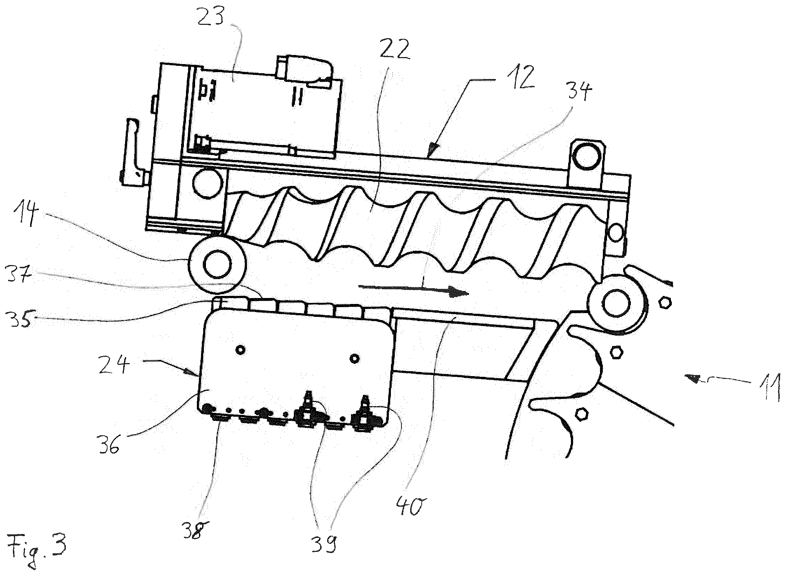

Fig. 3 zeigt einen Ausschnitt aus der erfindungsgemäßen Vorrichtung 10 gemäß Fig. 1 mit der Zuführeinrichtung 12. Die mittels des Zuführantriebs 23 um ihre Längsachse in Rotation versetzbare Schneckenwelle 22 weist in Förderrichtung gemäß Pfeil 34 sich vergrößernde Gangabstände bzw. eine sich vergrößernde Steigung auf. Auch der Kerndurchmesser und der Nenndurchmesser der Schneckenwelle 22 nimmt in Förderrichtung gemäß Pfeil 34 zu, wodurch sich eine im Wesentlichen konische Gestalt für die Schneckenwelle 22 ergibt. Die Gegenführung 24 hat einen Bereich mit mehreren Führungsstempeln 35. Bei diesem Ausführungsbeispiel sind insgesamt sechs Führungsstempel 35 vorgesehen. Für eine bessere Übersichtlichkeit sind nicht sämtliche Führungsstempel 35 mit einem Bezugszeichen versehen.

Die Führungsstempel 35 sind im Wesentlichen parallel zur Längsachse der Schneckenwelle 22 bzw. der Förderrichtung gemäß Pfeil 34 nebeneinander und nacheinander folgend angeordnet. Bei diesem Ausführungsbeispiel ist der Abstand der aufeinander folgenden Führungsstempel 35 möglichst klein gewählt. Die Führungsstempel 35 sind rechtwinkelig zur Förderrichtung gemäß Pfeil 34 in einem Gehäuse 36 angeordnet. Des Weiteren weisen die Führungsstempel 35 jeweils eine Anlagefläche 37 auf. Die Anlagefläche 37 steigt jeweils rampenartig in Förderrichtung gemäß Pfeil 34 an. Zudem ist die Anlagefläche 37 der Schneckenwelle 22 zugewandt. Die Ebenen der Anlageflächen 37 sind im Wesentlichen rechtwinklig zur Ebene des Prozessierungssternrades 11 ausgerichtet.

Bei diesem Ausführungsbeispiel sind die Führungsstempel 35 rechtwinkelig zur Förderrichtung gemäß Pfeil 34 innerhalb des Gehäuses 36 federnd gelagert. Somit sind die Führungsstempel 35 unabhängig voneinander beweglich gelagert. Jeder Führungsstempel 35 weist eine Einstelleinrichtung 38 zum individuellen Einstellen der Federkraft des Führungsstempels 35 auf. Für eine bessere Übersichtlichkeit sind nicht alle Einstelleinrichtungen 38 mit einem Bezugszeichen versehen.

Bei diesem Ausführungsbeispiel weist der in Förderrichtung bzw. stromabwärts gemäß Pfeil 34 letzte Führungsstempel 35, nämlich der sechste Führungsstempel 35, sowie der in Förderrichtung gemäß Pfeil 34 vierte Führungsstempel 35 jeweils einen Sensor 39 auf. Mittels der Sensoren 39 ist die jeweilige Auslenkung des Führungsstempels 35 erfassbar. Die Sensoren 39 sind mit einer hier nicht näher dargestellten Steuerung verbunden.

Des Weiteren weist die Gegenführung 24 bei diesem Ausführungsbeispiel einen Führungsabschnitt 40 auf. Der Führungsabschnitt 40 ist starr und schienenartig ausgebildet und ist zwischen dem Gehäuse 36 und dem Prozessierungssternrad 11 angeordnet. Der starre Führungsabschnitt 40 ist in Verlängerung der Führungsstempel 35 bzw. der Anlageflächen 37 parallel zur Längsachse der Schneckenwelle 22 bzw. der Förderrichtung gemäß Pfeil 34 ausgerichtet.

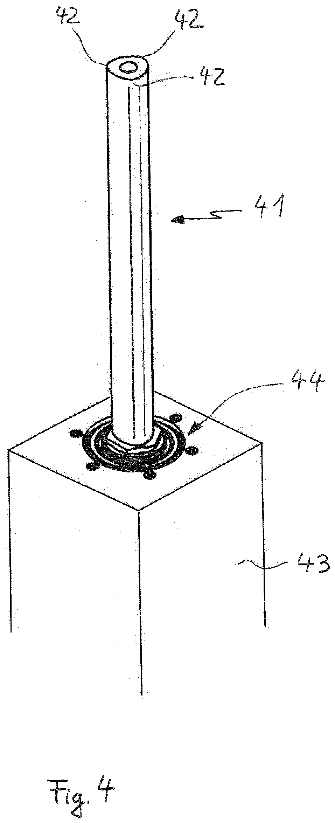

Fig. 4 zeigt eine perspektivische Seitenansicht einer Antriebsachse 41 für eine erfindungsgemäße Vorrichtung 10. Die Antriebsachse 41 ist als eine Polygonwelle ausgebildet, wobei der Querschnitt der Antriebsachse 41 eine im Wesentlichen dreiseitige Grundform aufweist. Hierbei sind Kanten 42 der Antriebsachse 41 bei diesem Ausführungsbeispiel abgerundet ausgebildet. Die Antriebsachse 41 ist mit einem Prozessierungssternantrieb 43 zum Antreiben eines Prozessierungssternrades 11 verbunden. Alternativ hierzu kann der Antrieb 43 auch als ein Ausführantrieb zum Antreiben eines Ausführsternrades 25 ausgebildet sein. Hier ist die Antriebsachse 41 beispielhaft mittels einer Kupplung 44 mit dem Antrieb 43 verbunden. Die Kupplung 44 ist derart ausgebildet, dass bei einer vorgegebenen Überlastung der Antrieb 43 von der Antriebsachse 41 getrennt wird.

Der Querschnitt der Antriebsachse 41 ist bei diesem Ausführungsbeispiel derart ausgebildet, dass die Antriebsachse 41 formschlüssig und passgenau mit der Achsaufnahme 20 gemäß Figur 1 des Prozessierungssternrades 11 verbindbar ist.

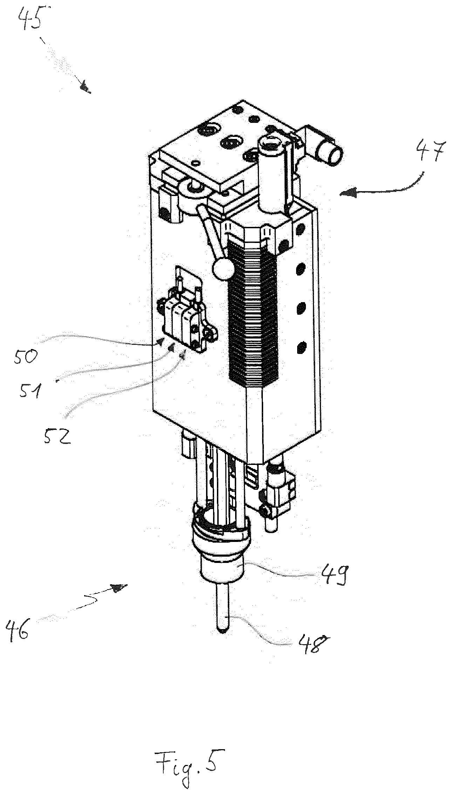

Fig. 5 zeigt eine perspektivische Seitenansicht einer Prozessierungseinrichtung 45 für eine erfindungsgemäße Vorrichtung 10, wobei die Prozessierungseinrichtung 45 anstelle einer der Prozessierungseinrichtungen 21 im Bereich des Prozessierungssternrades 11 angeordnet sein kann. Hierbei wird die Prozessierungseinrichtung 11 derart oberhalb einer Tasche 15 positioniert, dass ein Prüf- und/oder Messkopf 46 der Prozessierungseinrichtung 11 mittels eines Linearantriebes 47 vertikal in Richtung eines Behälters 14 und von dem Behälter 14 weg verfahrbar ist.

Der Prüf- und/oder Messkopf 46 weist bei diesem Ausführungsbeispiel eine Innenlehre 48 und eine Außenlehre 49 auf. Die Innenlehre 48 ist in eine hier nicht näher dargestellte Öffnung des Behälters 14 einführbar. Insbesondere handelt es sich bei der Öffnung um eine Flaschenöffnung an einem freien Ende eines Flaschenhalses eines als Flasche ausgebildeten Behälters 14. Hier ist die Innenlehre 48 beispielhaft als eine Art Stempel ausgebildet. Die Innenlehre 48 ist derart ausgebildet, dass diese ein vorgegebenes Stück bzw. eine vorgegebene Strecke in die Öffnung des Behälters 14 einführbar ist. Kann die Innenlehre 48 nicht den vorgegebenen Weg zurücklegen oder kann die Innenlehre 48 über den vorgegebenen Weg hinaus in die Öffnung des Behälters 14 hinein verfahren werden, kann dies als ein Hinweis gewertet werden, dass der Behälter 14 nicht den vorgegebenen Maßen entspricht.

Entsprechend kann ein Verfahrweg der Außenlehre 49 ausgewertet werden. Insbesondere ist die Außenlehre 49 über ein freies Ende eines Flaschenhalses des als Flasche ausgebildeten Behälters 14 stülpbar. Hierfür kann in Abhängigkeit von der Gestaltung des Behälters und der Anordnung der Prozessierungseinrichtung 11 eine bestimmter Verfahrweg für die Außenlehre 49 vorgegeben sein. Entspricht der tatsächlich zurückgelegte Weg der Außenlehre 49 nicht dem vorgegeben Wert, kann dies als Hinweis gewertet werden, dass der Behälter 14 nicht den vorgegeben Maßen entspricht.

Die Prozessierungseinrichtung 11 weist Sensoren 50, 51, 52 auf. Bei diesem Ausführungsbeispiel sind die Sensoren 50, 51, 52 als Positionssensoren ausgebildet. Der Sensor 50 dient zum Bestimmen der Position der Außenlehre 49, der Sensor 51 zum Bestimmen der Position des Linearantriebes 47 und der Sensor 52 zum Bestimmen der Position der Innenlehre 48. Mittels der Sensoren 50, 51, 52 können absolute Messwerte in Bezug zu einem einzelnen Behälter 14 ermittelt werden.

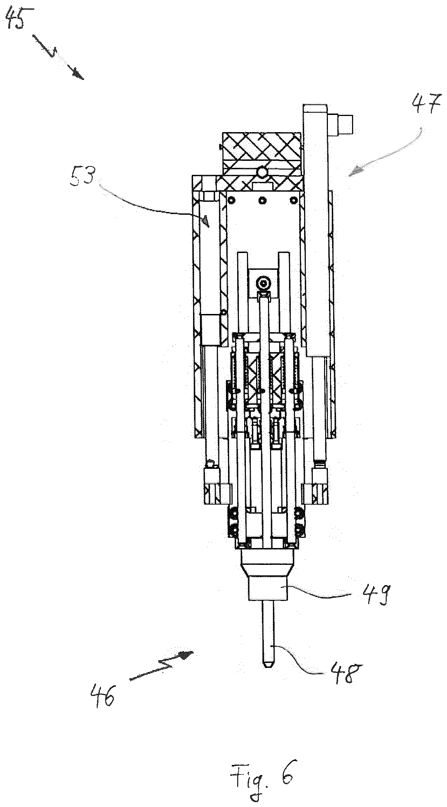

Fig. 6 zeigt eine erste geschnittene Seitenansicht der Prozessierungseinrichtung 45 gemäß Fig. 5. Der Linearantrieb 47 der Prozessierungseinrichtung 45 ist für eine vertikale Bewegbarkeit und/oder Verstellbarkeit der Innenlehre 48 und der Außenlehre 49 ausgerichtet. Bei diesem Ausführungsbeispiel hat die Prozessierungseinrichtung 45 eine Gegenkrafteinrichtung 53. Die Gegenkrafteinrichtung 53 ist dem Linearantrieb 47 zugeordnet und dient zum Ausgleich der Gewichtskraft. Somit kann ein in vertikaler Richtung beweglicher Teil der Prozessierungseinrichtung 45, wie hier beispielsweise der Prüf- und/oder Messkopf 46, in Bezug zur Gewichtskraft in einem Kräftegleichgewicht gehalten werden. Bei diesem Ausführungsbeispiel weist die Gegenkrafteinrichtung 53 eine hier nicht näher dargestellte magnetische Feder auf.

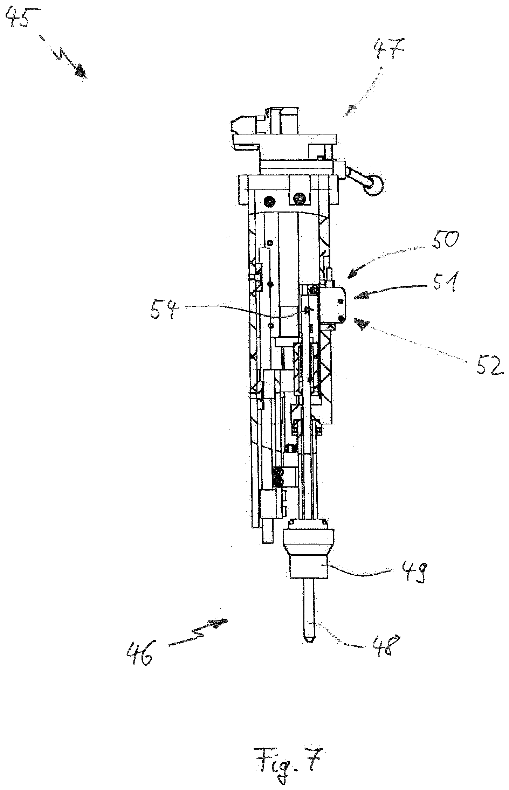

Fig. 7 zeigt eine weitere geschnittene Seitenansicht der Prozessierungseinrichtung 45 gemäß Fig. 5. Die Sensoren 50, 51, 52 weisen jeweils ein Magnetband 54 auf. Somit sind die Sensoren 50, 51, 52 bei diesem Ausführungsbeispiel als magnetische Positionssensoren ausgebildet.

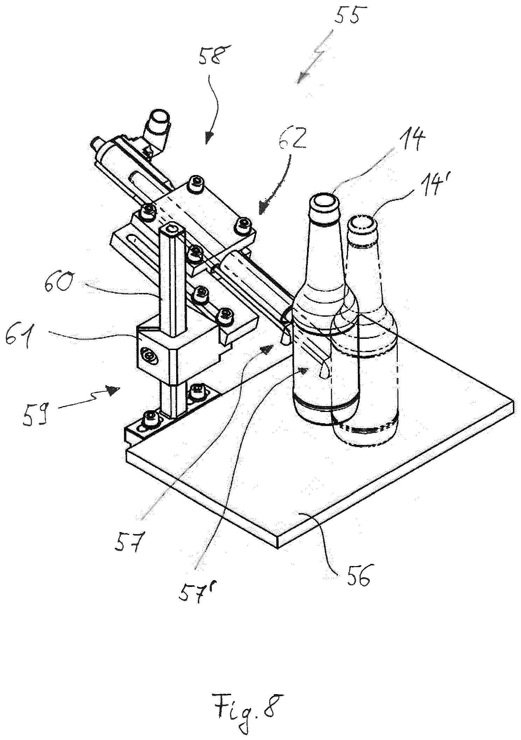

Fig. 8 zeigt eine perspektivische Seitenansicht einer Bearbeitungseinrichtung 55. Bei diesem Ausführungsbeispiel ist die Bearbeitungseinrichtung 55 als eine Auswurfeinrichtung ausgebildet und dient zum Auswerfen eines einzelnen Behälters 14. Hier ist der Behälter 14 einmal in einer Ausgangslage sowie zusätzlich als Behälter 14' mit gestrichelten Linien in einer zu der Ausgangslage verschobenen Lage dargestellt. Der Behälter 14 steht in seiner Ausgangslage auf einer Fördereinrichtung 56. Bei diesem Ausführungsbeispiel ist die Fördereinrichtung 56 als ein Förderband ausgebildet, mit dem der Behälter 14 der Bearbeitungseinrichtung 55 zugeführt wird. Die Bearbeitungseinrichtung kann in Förderrichtung nach der Vorrichtung 10 gemäß Fig. 1 angeordnet sein.

Die Bearbeitungseinrichtung 55 hat ein bewegbares Auswurfelement 57. Hier ist das Auswurfelement 57 einmal in einer Bereitschaftsposition und zusätzlich als Auswurfelement 57' mit gestrichelten Linien in einer Auswurfposition gezeigt. Das Auswurfelement 57 hat ein freies Ende, das dem Behälter 14 bzw. der Fördereinrichtung 56 zugewandt ist. Mittels des Auswurfelementes 57 kann der Behälter 14 ausgeworfen bzw. von der Fördereinrichtung 56 gestoßen werden.

Des Weiteren hat die Bearbeitungseinrichtung 55 einen Auswurfantrieb 58 zum Antreiben des Auswurfelementes 57. Somit ist die Bewegbarkeit des Auswurfelementes 57 mittels des Auswurfantriebes 58 realisierbar. Bei diesem Ausführungsbeispiel ist der Auswurfantrieb 58 als ein Linearantrieb ausgebildet. Der Auswurfantrieb 58, das Auswurfelement 57 und eine Bewegung des Auswurfelementes 57 sind mittels einer hier nicht näher dargestellten Steuerung steuerbar.

Die Bearbeitungseinrichtung 55 weist eine Tragstruktur 59 auf. An der Tragstruktur 59 ist das Auswurfelement 57 und der Auswurfantrieb 58 befestigt. Hierbei ist das Auswurfelement 57 hinsichtlich seiner Höhe einstellbar an der Tragstruktur 59 anordenbar. Somit ist das Auswurfelement 57 an der Tragstruktur 59 in unterschiedlichen Höhen in Bezug zu der Fördereinrichtung 56 für die Behälter 12 bzw. in Bezug zu einem Behälter 14 festsetzbar.

Die Tragstruktur 59 weist bei diesem Ausführungsbeispiel eine Tragsäule 60 auf. Eine Halteeinrichtung 61 umgreift die Tragsäule 60 und ist stufenlos in verschiedenen Höhen an der Tragsäule 60 festsetzbar. Die Haltereinrichtung 60 wiederum ist mit einer Führung 62 verbunden. Die Führung 62 dient zum Aufnehmen und Führen des Auswurfelementes 57.

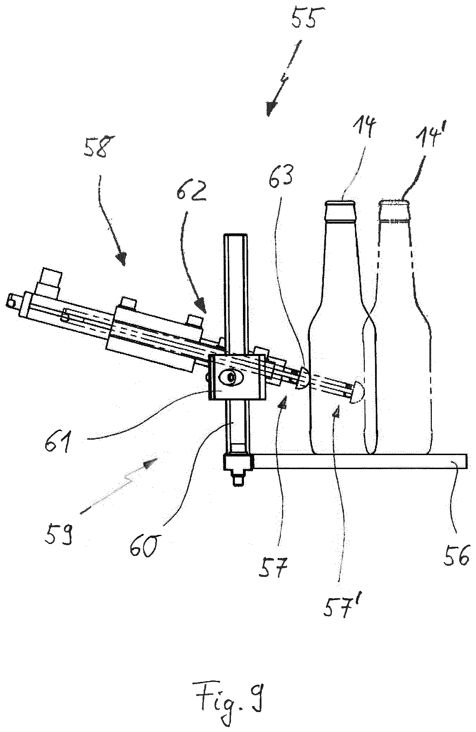

Fig. 9 zeigt eine Seitenansicht der Bearbeitungseinrichtung 55 gemäß Fig. 8. Es ist gut zu erkennen, dass das freie Ende des Auswurfelementes 57 eine Stoßkappe 63 aufweist. Mittels der Stoßkappe 63 stößt das Auswurfelement 57 an dem Behälter 14 an, um den Behälter 14 auszuwerfen.

Das Auswurfelement 57 ist geradlinig bzw. linear bewegbar gelagert. Hierbei ist das Auswurfelement 57 entlang einer geraden Bewegungslinie bzw. der geradlinigen Führung 62 bewegbar, die sich schräg von oben nach unten in Richtung des Behälters 14 bzw. in Richtung der Fördereinrichtung 56 erstreckt. Die Bewegungslinie bzw. die Führung 62 für das Auswurfelement 57 ist rechtwinklig zu einer Förderrichtung für den Behälter 14 bzw. zur Förderrichtung oder Längsachse der Fördereinrichtung 56 ausgerichtet. Des Weiteren ist die Bewegungslinie bzw. die Führung 62 schräg zu einer Horizontalen von oben nach ausgerichtet. Bei diesem Ausführungsbeispiel ist die Bewegungslinie bzw. die Führung 62 für das Auswurfelement 57 mit einem Winkel von 20° zur Horizontalen schräg nach unten ausgerichtet.

Somit wird das Auswurfelement 57 aus seiner Bereitschaftsposition schräg nach unten in seine Auswurfposition aus der Führung 62 zum Auswerfen des Behälters 14 ausgefahren. Zum Überführen des Auswurfelementes 57 aus der Auswurfposition in die Bereitschaftsposition wird das Auswurfelement 57 schräg von unten nach oben in die Führung 62 hinein gefahren.

Die Bearbeitungseinrichtung 55 kann eine hier nicht näher dargestellte Steuerung aufweisen. Mittels der Steuerung ist die Ausrichtung des Auswurfelementes 57 bzw. der Winkel zur Horizontalen und/oder die Höhe einstellbar. Hierbei kann der Winkel des Auswurfelementes 57 zur Horizontalen, die Höhenfestlegung des Auswurfelementes 57 an der Tragstruktur 59 und/oder eine Position eines Treffpunktes des Auswurfelementes 57 mit dem Behälter 14 in Abhängigkeit von der Geometrie, Gestalt und/oder einem Schwerpunkt des Behälters 14 berechnet werden. In Abhängigkeit von der Geometrie, Gestalt und/oder dem Schwerpunkt des Behälters 14 wird ein Bewegungsprofil für das Auswurfelement 57 berechnet.

Bei einer geeignet vorgegebenen Bewegung des Auswurfelementes 57 bzw. einem geeigneten Bewegungsprofil für das Auswurfelement 57, das mittels des Auswurfantriebes 58 umgesetzt wird, ist der Behälter 14 besonders präzise und reproduzierbar beschleunigbar, um von der Fördereinrichtung 56 ausgeworfen bzw. entfernt zu werden. Somit kann der Behälter 14 mittels der Bearbeitungseinrichtung 55 auf zuverlässige Weise von der Fördereinrichtung 56 beispielsweise in einen bereit stehenden Container gestoßen werden.

**Bezuaszeichenliste:**

| | | | |
|---|---|---|---|
| 10 | Vorrichtung | 48 | Innenlehre |
| 11 | Prozessierungssternrad | 49 | Außenlehre |
| 12 | Zuführeinrichtung | 50 | Sensor |
| 13 | Ausführeinrichtung | 51 | Sensor |
| 14 | Behälter | 52 | Sensor |
| 15 | Tasche | 53 | Gegenkrafteinrichtung |
| 16 | Zacke | 54 | Magnetband |
| 17 | Ringsegment | 55 | Bearbeitungseinrichtung |
| 18 | Ringsegment | 56 | Fördereinrichtung |
| 19 | Ringsegment | 57 | Auswurfelement |
| 20 | Achsaufnahme | 58 | Auswurfantrieb |
| 21 | Prozessierungseinrichtung | 59 | Tragstruktur |
| 22 | Schneckenwelle | 60 | Tragsäule |
| 23 | Zuführantrieb | 61 | Halteeinrichtung |
| 24 | Gegenführung | 62 | Führung |
| 25 | Ausführsternrad | 63 | Stoßkappe |
| 26 | Führungsschiene | | |
| 27 | Drehachse | | |
| 28 | Zacke | | |
| 29 | Pfeil | | |
| 30 | Mitnahmebereich | | |
| 31 | Einlaufbereich | | |
| 32 | Aufnahme | | |
| 33 | Führungsbogen | | |
| 34 | Pfeil | | |
| 35 | Führungsstempel | | |
| 36 | Gehäuse | | |
| 37 | Anlagefläche | | |
| 38 | Einstelleinrichtung | | |
| 39 | Sensor | | |
| 40 | Führungsabschnitt | | |
| 41 | Antriebsachse | | |
| 42 | Kante | | |
| 43 | Antrieb | | |
| 44 | Kupplung | | |
| 45 | Prozessierungseinrichtung | | |
| 46 | Prüf- und/oder Messkopf | | |
| 47 | Linearantrieb | | |

## Patentansprüche

1. Vorrichtung zum Vereinzeln und/oder Prüfen von Behältern (14) mit mindestens einem schrittweise antreibbaren Prozessierungssternrad (11) zum Zuführen von Behältern (14) zu mindestens einer Prozessierungseinrichtung (21, 45), und mit einer kontinuierlich antreibbaren Ausführeinrichtung (13) zum Ausführen der Behälter (14) aus dem Prozessierungssternrad (11), wobei die Ausführeinrichtung (13) mindestens ein Ausführsternrad (25) aufweist, wobei das Ausführsternrad (25) mit einem Ausführantrieb zum kontinuierlichen Antreiben des Ausführsternrades (25) verbunden ist, wobei ein Behälter mittels des Ausführsternrades (25) aus einer schrittweisen Drehbewegung in eine kontinuierliche Bewegung überführbar ist, wobei
mehrere Taschen (15) am Außenumfang des Prozessierungssternrades (11) angeordnet sind, die durch Zacken (16) gebildet sind, und das Ausführsternrad (25) an seinem Außenumfang mehrere gleichmäßig verteilte Aufnahmen (32) zum Aufnehmen und Führen eines einzelnen Behälters (14) hat, wobei die Aufnahmen (32) durch Zacken (28) und/oder Stege des Ausführsternrades (25) begrenzt und/oder gebildet sind,
**dadurch gekennzeichnet, dass**
die Zacken (28) und/oder Stege des Ausführsternrades (25) sich in Förderrichtung geneigt vom Außenumfang des Ausführsternrades (25) weg erstrecken.

2. Vorrichtung nach Anspruch 1, **dadurch gekennzeichnet, dass** die Ausführeinrichtung (13) eine Führungsschiene (26) hat, die zum Zusammenwirken mit dem Ausführsternrad (25) angeordnet ist, insbesondere sind Behälter (14) zwischen der Führungsschiene (26) und dem Ausführsternrad (25) führbar, wobei vorzugsweise die Führungsschiene (26) einen, insbesondere kreissegmentartigen, Führungsbogen (33) hat, insbesondere ist der Führungsbogen (33) mit einem vorgegebenen radialen Abstand von einer Drehachse (27) des Ausführsternrades (25) und/oder vom Außenumfang des Ausführsternrades (25) beabstandet.

3. Vorrichtung nach Anspruch 1 oder 2, **dadurch gekennzeichnet, dass**, die Aufnahmen (32) jeweils einen rampenartigen Einlaufbereich (31) zum Einführen eines einzelnen Behälters (14) in die Aufnahme (32) haben und/oder einen Mitnahmebereich (30) zum Mitführen eines einzelnen Behälters (14), insbesondere ist eine Gestalt der Aufnahmen (32) an die Kontur des Behälters (14) angepasst und/oder die Aufnahmen sind entsprechend der Kontur des Behälters (14) ausgebildet.

4. Vorrichtung nach einem der vorhergehenden Ansprüche, **dadurch gekennzeichnet, dass**, der Abstand der Zacken (28) und/oder Stege des Ausführsternrades (25) größer ist als der Abstand von Zacken (16) und/oder Stegen des Prozessierungssternrades (11), insbesondere haben die Aufnahmen (32) ein maximales Innenmaß und/oder einen Innendurchmesser, der in einem Bereich des 1-fachen bis 1,5-fachen der maximalen Breite und/oder des Außendurchmessers des Behälters (14) liegt.

5. Vorrichtung nach einem der vorhergehenden Ansprüche, **dadurch gekennzeichnet, dass** die Zacken (28) und/oder Stege des Ausführsternrades (25) eine, insbesondere in Bezug auf eine Förderrichtung für die Behälter (14) und/oder eine Drehrichtung des Ausführsternrades (25) um seine Drehachse (27), stromabwärtige Flanke und eine stromaufwärtige Flanke haben, wobei vorzugsweise die stromaufwärtige Flanke mindestens Bestandteil eines Einlaufbereiches (31) zum Einführen eines einzelnen Behälters (14) in eine einzelne Aufnahme (32) und/oder die stromabwärtige Flanke mindestens Bestandteil eines Mitnahmebereiches (30) zum Mitführen eines einzelnen Behälters (14) ist.

6. Vorrichtung nach einem der vorhergehenden Ansprüche, **dadurch gekennzeichnet, dass** das Prozessierungssternrad (11) mit einem Prozessierungssternantrieb (43) zum schrittweisen Antreiben des Prozessierungssternrades (11) verbunden, vorzugsweise ist ein Behälter mittels des Ausführsternrades (25) aus einer schrittweisen Drehbewegung in eine kontinuierliche Bewegung mit einer konstanten Bewegungsgeschwindigkeit überführbar, vorzugsweise ist eine Steuerung zum Ansteuern des Prozessierungssternantriebes (43) in Abhängigkeit vom Ausführantrieb und/oder einem Zuführantrieb (23) vorgesehen.

7. Vorrichtung nach einem der vorhergehenden Ansprüche, **dadurch gekennzeichnet, dass** eine Antriebsachse (41) einen Prozessierungssternantrieb (43) mit dem Prozessierungssternrad (11) und/oder einen Ausführantrieb (43) mit dem Ausführsternrad (25) verbindet, wobei die Antriebsachse (41) einen polygonen Querschnitt hat, insbesondere ist die Antriebsachse (41) als eine Polygonwelle, vorzugsweise mit einer hinsichtlich des Querschnittes im Wesentlichen dreiseitigen Grundform, ausgebildet.

8. Vorrichtung nach einem der vorhergehenden Ansprüche, **dadurch gekennzeichnet, dass** eine Zuführeinrichtung (12) zum Vereinzeln der Behälter (14) und/oder zum Zuführen der Behälter (14) zum Prozessierungssternrad (11) vorgesehen ist, wobei vorzugsweise die Zuführeinrichtung (12) mindestens eine Schneckenwelle (22), insbesondere mit sich in Förderrichtung und/oder stromabwärtig vergrößerndem Kerndurchmesser, Nenndurchmesser und/oder Gangabstand, aufweist.

9. Vorrichtung nach Anspruch 8, **dadurch gekennzeichnet, dass** die Zuführeinrichtung (12) eine erste Schneckenwelle (22) und mindestens eine weitere Schneckenwelle aufweist, insbesondere ist die erste Schneckenwelle (22) zum Zusammenwirken mit einem Behälterkörper des Behälters (14) und die weitere Schneckenwelle zum Zusammenwirken mit einen Behälterhals des Behälters (14) ausgebildet, vorzugsweise sind die erste Schneckenwelle und die weitere Schneckenwelle mit voneinander abweichenden Rotationsgeschwindigkeiten antreibbar und/oder hinsichtlich ihrer Position zueinander verstellbar.

10. Vorrichtung nach Anspruch 8 oder 9, **dadurch gekennzeichnet, dass** die Schneckenwelle (22) mittels eines Zuführantriebes (23) antreibbar ist, vorzugsweise ist der Zuführantrieb mittels eines Riemens mit einem drehfest mit der Schneckenwelle verbundenen Rad verbunden, insbesondere ist ein erster Zuführantrieb (23) mit einer ersten Schneckenwelle (22) und ein weiterer Zuführantrieb mit einer weiteren Schneckenwelle verbunden.

11. Vorrichtung nach einem der Ansprüche 8 bis 10, **dadurch gekennzeichnet, dass** die Zuführeinrichtung (12) eine von der mindestens einen Schneckenwelle (22) beabstandete Gegenführung (24) zum Führen von Behältern (14) zwischen der mindestens einen Schneckenwelle (22) und der Gegenführung (24) hat, vorzugsweise weist die Gegenführung (24) mehrere, insbesondere federnd gelagerte, in Förderrichtung aufeinander folgende Führungsstempel (35) auf, vorzugsweise haben die Führungsstempel (35) jeweils eine sich in Förderrichtung rampenartig ansteigende Anlagefläche (37), die der Schneckenwelle (22) zugewandt ist.

12. Vorrichtung nach Anspruch 11, **dadurch gekennzeichnet, dass** mindestens ein Führungsstempel (35) mindestens einen Sensor (39) zum Erfassen der Auslenkung des Führungsstempels (35) aufweist, vorzugsweise ist der mindestens eine Sensor (39) mit einer Steuerung verbunden, insbesondere sind mehrere Führungsstempel (35) quer oder rechtwinklig zur Förderrichtung federnd gelagert, vorzugsweise weisen die Führungsstempel (35) jeweils eine Einstelleinrichtung (38) zum Einstellen der Federkraft auf.

13. Vorrichtung nach einem der vorhergehenden Ansprüche, **dadurch gekennzeichnet, dass** eine erste Fördereinrichtung zum Zuführen eines Behälters (14) zum Prozessierungssternrad (11), insbesondere zu einer Zuführeinrichtung (12), und eine zweite Fördereinrichtung (56) zum Ausführen des Behälters (14) aus dem Prozessierungssternrad (11), insbesondere dem Ausführsternrad (25), vorhanden sind, vorzugsweise sind die erste Fördereinrichtung und die zweite Fördereinrichtung (56) mit unterschiedlichen Fördergeschwindigkeiten betreibbar, insbesondere ist die erste Fördereinrichtung und/oder die zweite Fördereinrichtung (56) als ein Förderband zum Abstellen des Behälters (14) ausgebildet.

14. Vorrichtung nach einem der vorhergehenden Ansprüche, **dadurch gekennzeichnet, dass** eine Prozessierungseinrichtung (45) zum Bestimmen absoluter Messwerte in Bezug zu einem einzelnen Behälter (14) ausgebildet ist, insbesondere weist die Prozessierungseinrichtung (45) einen Linearantrieb (47) und/oder mindestens einen, vorzugsweise magnetischen, Wegsensor und/oder Positionssensor (50, 51, 52) auf, insbesondere hat die Prozessierungseinrichtung (45) eine verfahrbare Innenlehre (48) und/oder eine verfahrbare Außenlehre (49) zum Messen einer Höhe des Behälters (14), eines Außendurchmessers und/oder eines Innendurchmessers einer Öffnung des Behälters (14).

15. Vorrichtung nach Anspruch 14, **dadurch gekennzeichnet, dass** der Linearantrieb (47) der Prozessierungseinrichtung (45) für eine vertikale Bewegbarkeit und/oder Verstellbarkeit, insbesondere der Innenlehre (48) und/oder Außenlehre (49), ausgebildet ist, wobei vorzugsweise die Prozessierungseinrichtung (45) und/oder der Linearantrieb (47) eine Gegenkrafteinrichtung (53) zum Ausgleich einer Gewichtskraft hat, insbesondere weist die Gegenkrafteinrichtung (53) ein Federelement und/oder eine magnetische Feder auf.

16. Verfahren zum Vereinzeln und/oder Prüfen von Behältern (14) mit einer Vorrichtung (10) nach einem der vorhergehenden Ansprüche, wobei mit mindestens einem Prozessierungssternrad (11) und mittels einer schrittweisen Bewegung des Prozessierungssternrades (11) jeweils ein Behälter (14) zu mindestens einer Prozessierungseinrichtung (21, 45) geführt wird, und bei dem mit einer Ausführeinrichtung (13) die Behälter (14) mit einer kontinuierlichen Bewegung aus dem Prozessierungssternrad (11) ausgeführt werden,
wobei die Behälter (14) mittels mindestens eines Ausführsternrades (25) der Ausführeinrichtung (13) vereinzelt aus dem Prozessierungssternrad (11) ausgeführt werden, wobei zugleich mittels des Ausführsternrades (25) eine schrittweise Bewegung der Behälter (14) in eine kontinuierliche Bewegung der Behälter (14) umgewandelt wird.

## Claims

1. Device for separating and/or testing containers (14) with at least one processing star wheel (11) that can be driven step-by-step and that is used to feed containers (14) to at least one processing system (21, 45), and with a continuously drivable discharge device (13) for removing the containers (14) from the processing star wheel (11), wherein the discharge device (13) possesses at least one discharge star wheel (25), wherein the discharge star wheel (25) is connected to a delivery drive for continuously driving the discharge star wheel (25), wherein a container can be converted from a stepwise rotational movement into a continuous movement by means of the discharge star wheel (25), wherein a plurality of pockets (15) are arranged on the outer circumference of the processing star wheel (11) which are formed by teeth (16), and the discharge star wheel (25) has a plurality of evenly distributed receptacles (32) on its outer circumference to receive and guide an individual container (14), wherein the receptacles (32) are formed and/or delimited by teeth (28) and/or bars of the discharge star wheel (25),
**characterised in that**
the teeth (28) and/or bars of the discharge star wheel (25) extend outward in the conveying direction at an angle from the outer circumference of the discharge star wheel (25).

2. Device according to claim 1, **characterised in that** the discharge device (13) has a guide rail (26) that is arranged to cooperate with the discharge star wheel (25), in particular containers (14) are guidable between the guide rail (26) and the discharge star wheel (25), wherein the guide rail (26) preferably has a guide arc (33), in particular in the form of a segment of a circle; in particular, the guide arc (33) is spaced apart at a predetermined radial distance from an axis of rotation (27) of the discharge star wheel (25) and/or from the outer circumference of the discharge star wheel (25).

3. Device according to claim 1 or 2, **characterised in that** the receptacles (32) each have a ramp-like entry area (31) for inserting a single container (14) into the receptacle (32) and/or an entrainment area (30) for carrying along an individual container (14), in particular a shape of the receptacle (32) is adapted to the contour of the container (14) and/or the receptacles are formed according to the contour of the container (14).

4. Device according to one of the preceding claims, **characterised in that** the spacing of the teeth (28) and/or bars of the discharge star wheel (25) is greater than the spacing of the teeth (16) and/or bars of the processing star wheel (11), in particular the receptacles (32) have a maximum internal dimension and/or an internal diameter which is in a range of 1 to 1.5 times the maximum width and/or the outer diameter of the container (14).

5. Device according to one of the preceding claims, **characterised in that** the teeth (28) and/or bars of the discharge star wheel (25) have a direction of rotation, in particular with regard to a conveying direction for the containers (14) and/or a direction of rotation of the discharge star wheel (25) about its axis of rotation (27), have a downstream flank and an upstream flank, wherein the upstream flank is preferably at least part of an inlet area (31) for introducing a single container (14) into a single receptacle (32) and/or the downstream flank is at least part of a pick-up area (30) for carrying a single container (14).

6. Device according to one of the preceding claims, **characterised in that** the processing star wheel (11) is connected to a processing star drive (43) for incrementally driving the processing star wheel (11), preferably a container can be transferred at a constant speed of movement by means of the discharge star wheel (25) from an incremental rotational movement into a continuous movement, preferably a controller is provided for activating the processing star drive (43) depending on the discharge drive and/or a feed drive (23).

7. Device according to one of the preceding claims, **characterised in that** a drive axle (41) connects a processing star drive (43) to the processing star wheel (11) and/or connects a discharge drive (43) to the discharge star wheel (25), wherein the drive axle (41) has a has a polygonal cross-section, in particular the drive axle (41) is designed as a polygonal shaft, preferably with an essentially three-sided basic shape in terms of its cross-section.

8. Device according to one of the preceding claims, **characterised in that** a feed device (12) for separating the containers (14) and/or for feeding the containers (14) to the processing star wheel (11) is provided, wherein the feed device (12) preferably has at least one worm shaft (22), in particular with a core diameter, nominal diameter and/or pitch that increases in the conveying direction and/or downstream direction.

9. Device according to claim 8, **characterised in that** the feed device (12) has a first worm shaft (22) and at least one further worm shaft, in particular the first worm shaft (22) is designed to cooperate with a container body of the container (14) and the further worm shaft to cooperate with a container neck of the container (14), preferably the first worm shaft and the further worm shaft can be driven at different rotational speeds and/or their position relative to one another can be adjusted.

10. Device according to claim 8 or 9, **characterised in that** the worm shaft (22) can be driven by means of a feed drive (23), preferably the feed drive is connected by means of a belt to a wheel which is non-rotatably connected to the worm shaft, in particular a first feed drive (23) connected to a first worm shaft (22) and a further feed drive to a further worm shaft.

11. Device according to one of claims 8 to 10, **characterised in that** the feed device (12) has a counter-guide (24) spaced from the at least one screw shaft (22) for guiding containers (14) between the at least one screw shaft (22) and the counter-guide (24), preferably the counter-guide (24) has a plurality of, in particular spring-loaded, guide plungers (35) that follow one another in the conveying direction, preferably the guide plungers (35) each have a contact surface (37) that rises in a ramp-like manner in the conveying direction, and which faces the worm shaft (22).

12. Device according to claim 11, **characterised in that** at least one guide stamp (35) has at least one sensor (39) for detecting the deflection of the guide stamp (35), preferably the at least one sensor (39) is connected to a controller, in particular there are several guide stamps (35) spring-mounted transversely or at right angles to the conveying direction, preferably the guide stamps (35) each have an adjusting device (38) for adjusting the spring force.

13. Device according to one of the preceding claims, **characterised in that** a first conveyor device for feeding a container (14) to the processing star wheel (11), in particular to a feed device (12), and a second conveyor device (56) for discharging the container (14) from the processing star wheel (11) are available, in particular to the discharge star wheel (25), preferably the first conveyor device and the second conveyor device (56) can be operated at different conveying speeds, in particular the first conveyor device and/or the second conveyor device (56) is a conveyor belt designed to store the container (14).

14. Device according to one of the preceding claims, **characterised in that** a processing device (45) is designed for determining absolute measured values in relation to an individual container (14), in particular the processing device (45) has a linear drive (47) and/or at least one preferably magnetic, displacement sensor and/or position sensor (50, 51, 52), in particular the processing device (45) has a movable inner gauge (48) and/or a movable outer gauge (49) for measuring a height of the container (14), an outer diameter and/or an inside diameter of an opening of the container (14).

15. Device according to claim 14, **characterised in that** the linear drive (47) of the processing device (45) is designed for vertical mobility and/or adjustability, in particular of the inner gauge (48) and/or outer gauge (49), wherein the processing device ( 45) and/or the linear drive (47) has a counterforce device (53) to compensate for a weight, in particular the counterforce device (53) has a spring element and/or a magnetic spring.

16. Method for separating and/or checking containers (14) with a device (10) according to one of the preceding claims, wherein with at least one processing star wheel (11) and by means of a stepwise movement of the processing star wheel (11), each container (14) is guided to at least one processing device (21, 45), and in which the containers (14) are discharged from the processing star wheel (11) with a continuous movement using a discharge device (13), wherein the containers (14) are discharged individually from the processing star wheel (11) by means of at least one discharge star wheel (25) of the discharge device (13), wherein at the same time a stepwise movement of the containers (14) is converted by means of the discharge star wheel (25) into a continuous movement of the containers (14).

## Revendications

1. Dispositif pour isoler et/ou contrôler des récipients (14) avec au moins une roue de traitement en étoile (11) pouvant être entraînée pas à pas pour amener des récipients (14) à au moins un système de traitement (21, 45), et avec un système d'évacuation (13) pouvant être entraîné en continu pour évacuer les récipients (14) de la roue de traitement en étoile (11), dans lequel le système d'évacuation (13) présente au moins une roue d'évacuation en étoile (25), dans lequel la roue d'évacuation en étoile (25) est reliée à un entraînement d'évacuation pour l'entraînement en continu de la roue d'évacuation en étoile (25), dans lequel un récipient peut être amené au moyen de la roue d'évacuation en étoile (25) d'un mouvement rotatif pas à pas à un mouvement continu, **caractérisé en ce que** plusieurs poches (15) sont disposées sur la périphérie extérieure de la roue de traitement en étoile (11), qui sont formées par des pointes (16), la roue d'évacuation en étoile (25) possède sur sa périphérie extérieure plusieurs logements (32) répartis uniformément pour le logement et le guidage d'un récipient (14) individuel, dans lequel les logements (32) sont délimités et/ou formés par des pointes (28) et/ou éléments jointifs de la roue d'évacuation en étoile (25), et que les pointes (16, 28) et/ou éléments jointifs s'étendent dans la direction de transport de manière inclinée à distance de la périphérie extérieure de la roue d'évacuation en étoile (25).

2. Dispositif selon la revendication 1, **caractérisé en ce que** le système d'évacuation (13) possède un rail de guidage (26), qui est disposé pour coopérer avec la roue d'évacuation en étoile (25), en particulier les récipients (14) peuvent être guidés entre le rail de guidage (26) et la roue d'évacuation en étoile (25), dans lequel de préférence le rail de guidage (26) possède un arc de guidage (33), en particulier du type segment de cercle, en particulier l'arc de guidage (33) est espacé d'un axe de rotation (27) de la roue d'évacuation en étoile (25) et/ou de la périphérie extérieure de la roue d'évacuation en étoile (25) avec une distance radiale prédéfinie.

3. Dispositif selon la revendication 1 ou 2, **caractérisé en ce que** les logements (32) possèdent respectivement une zone d'entrée (31) du type rampe pour introduire un récipient (14) individuel dans le logement (32) et/ou une zone d'entraînement (30) pour entraîner un récipient (14) individuel, en particulier une forme des logements (32) est adaptée au contour du récipient (14) et/ou les logements sont réalisés de manière correspondante au contour du récipient (14).

4. Dispositif selon l'une quelconque des revendications précédentes, **caractérisé en ce que** la distance des pointes (28) et/ou éléments jointifs de la roue d'évacuation en étoile (25) est plus grande que la distance des pointes (16) et/ou éléments jointifs de la roue de traitement en étoile (11), en particulier les logements (32) possèdent une dimension intérieure maximale et/ou un diamètre intérieur qui se situe dans une plage de 1 fois à 1,5 fois la largeur maximale et/ou le diamètre extérieur du récipient (14).

5. Dispositif selon l'une quelconque des revendications précédentes, **caractérisé en ce que** les pointes (28) et/ou éléments jointifs de la roue d'évacuation en étoile (25) possèdent un flanc aval et un flanc amont, en particulier par rapport à une direction de transport pour les récipients (14) et/ou une direction de rotation de la roue d'évacuation en étoile (25) autour de son axe de rotation (27), dans lequel de préférence le flanc amont fait au moins partie d'une zone d'entrée (31) pour introduire un récipient (14) individuel dans un logement (32) individuel et/ou le flanc aval fait au moins partie d'une zone d'entraînement (30) pour entraîner un récipient (14) individuel.

6. Dispositif selon l'une quelconque des revendications précédentes, **caractérisé en ce que** la roue de traitement en étoile (11) est reliée à un entraînement de traitement en étoile (43) pour entraîner pas à pas la roue de traitement en étoile (11), de préférence un récipient peut être amené au moyen de la roue d'évacuation en étoile (25) d'un mouvement rotatif pas à pas à un mouvement continu avec une vitesse de mouvement constante, de préférence une commande pour commander l'entraînement de traitement en étoile (43) en fonction de l'entraînement d'évacuation et/ou d'un entraînement d'amenée (23) est prévue.

7. Dispositif selon l'une quelconque des revendications précédentes, **caractérisé en ce qu'**un axe d'entraînement (41) relie un entraînement de traitement en étoile (43) à la roue de traitement en étoile (11) et/ou un entraînement d'évacuation (43) à la roue d'évacuation en étoile (25), dans lequel l'axe d'entraînement (41) possède une section transversale polygonale, en particulier l'axe d'entraînement (41) est réalisé sous la forme d'un arbre polygonal, de préférence avec une forme de base sensiblement triangulaire en ce qui concerne la section transversale.

8. Dispositif selon l'une quelconque des revendications précédentes, **caractérisé en ce qu'**un système d'amenée (12) pour séparer les récipients (14) et/ou pour amener les récipients (14) à la roue de traitement en étoile (11) est prévu, dans lequel de préférence le système d'amenée (12) présente au moins un arbre à vis sans fin (22), en particulier avec un diamètre de noyau, diamètre nominal et/ou pas augmentant dans la direction de transport et/ou en aval.

9. Dispositif selon la revendication 8, **caractérisé en ce que** le système d'amenée (12) présente un premier arbre à vis sans fin (22) et au moins un autre arbre de vis sans fin, en particulier le premier arbre à vis sans fin (22) est réalisé pour coopérer avec un corps de récipient du récipient (14) et l'autre arbre de vis sans fin pour coopérer avec un col de récipient du récipient (14), de préférence le premier arbre de vis sans fin et l'autre arbre de vis sans fin peuvent être entraînés avec des vitesses de rotation différentes les unes des autres et/ou réglés l'un par rapport à l'autre en ce qui concerne leur position.

10. Dispositif selon la revendication 8 ou 9, **caractérisé en ce que** l'arbre à vis sans fin (22) peut être entraîné au moyen d'un entraînement d'amenée (23), de préférence l'entraînement d'amenée est relié au moyen d'une courroie à une roue reliée de manière solidaire en rotation à l'arbre de vis sans fin, en particulier un premier entraînement d'amenée (23) est relié à un premier arbre à vis sans fin (22) et un autre entraînement d'amenée à un autre arbre de vis sans fin.

11. Dispositif selon l'une quelconque des revendications 8 à 10, **caractérisé en ce que** le système d'amenée (12) possède un guidage complémentaire (24) espacé du au moins un arbre à vis sans fin (22) pour guider les récipients (14) entre le au moins un arbre à vis sans fin (22) et le guidage complémentaire (24), de préférence le guidage complémentaire (24) présente plusieurs poinçons de guidage (35), en particulier montés de manière élastique, se succédant dans la direction de transport, de préférence les poinçons de guidage (35) possèdent respectivement une surface d'appui (37) s'élevant à la façon d'une rampe dans la direction de transport, qui est tournée vers l'arbre à vis sans fin (22).

12. Dispositif selon la revendication 11, **caractérisé en ce qu'**au moins un poinçon de guidage (35) présente au moins un capteur (39) pour détecter la déviation du poinçon de guidage (35), de préférence le au moins un capteur (39) est relié à une commande, en particulier plusieurs poinçons de guidage (35) sont montés de manière élastique transversalement ou perpendiculairement par rapport à la direction de transport, de préférence les poinçons de guidage (35) présentent respectivement un système de réglage (38) pour régler la force de ressort.

13. Dispositif selon l'une quelconque des revendications précédentes, **caractérisé en ce qu'**un premier système de transport pour amener un récipient (14) à la roue de traitement en étoile (11), en particulier à un système d'amenée (12), et un deuxième système de transport (56) pour évacuer le récipient (14) de la roue de traitement en étoile (11), en particulier de la roue d'évacuation en étoile (25), sont présents, de préférence le premier système de transport et le deuxième système de transport (56) peuvent fonctionner avec différentes vitesses de transport, en particulier le premier système de transport et/ou le deuxième système de transport (56) est réalisé sous la forme d'une bande transporteuse pour positionner le récipient (14).

14. Dispositif selon l'une quelconque des revendications précédentes, **caractérisé en ce qu'**un système de traitement (45) est réalisé pour déterminer des valeurs de mesure absolues par rapport à un récipient (14) individuel, en particulier le système de traitement (45) présente un entraînement linéaire (47) et/ou au moins un capteur de course et/ou capteur de position (50, 51, 52), de préférence magnétique, en particulier le système de traitement (45) possède un gabarit intérieur déplaçable (48) et/ou un gabarit extérieur déplaçable (49) pour mesurer une hauteur du récipient (14), un diamètre extérieur et/ou un diamètre intérieur d'une ouverture du récipient (14).

15. Dispositif selon la revendication 14, **caractérisé en ce que** l'entraînement linéaire (47) du système de traitement (45) est réalisé pour une mobilité et/ou faculté de déplacement verticale, en particulier du gabarit intérieur (48) et/ou gabarit extérieur (49), dans lequel de préférence le système de traitement (45) et/ou l'entraînement linéaire (47) possède un système de force antagoniste (53) pour compenser une force antagoniste, en particulier le système de force antagoniste (53) présente un élément ressort et/ou un ressort magnétique.

16. Procédé pour séparer et/ou contrôler des récipients (14) avec un dispositif (10) selon l'une quelconque des revendications précédentes, dans lequel avec au moins une roue de traitement en étoile (11) et au moyen d'un mouvement pas à pas de la roue de traitement en étoile (11) respectivement un récipient (14) est guidé vers au moins un système de traitement (21, 45), et selon lequel avec un système d'évacuation (13) les récipients (14) sont évacués de la roue de traitement en étoile (11) avec un mouvement continu, **caractérisé en ce que** les récipients (14) sont évacués de manière séparée de la roue de traitement en étoile (11) au moyen d'au moins une roue d'évacuation en étoile (25) du système d'évacuation (13), dans lequel en même temps un mouvement pas à pas des récipients (14) est converti en un mouvement continu des récipients (14) au moyen de la roue d'évacuation en étoile (25).
